# EUROPEAN PATENT APPLICATION

(11) **EP 4 510 727 A1**
(43) Date of publication of application: **19.02.2025**
(21) Application number: 23799137.7
(22) Date of filing: 21.03.2023
(51) Int. Cl.: H04W 68/00

(54) **COMMUNICATION METHOD AND APPARATUS**

(30) Priority: 05.05.2022 CN 202210482392
(71) Applicant: Huawei Technologies Co., Ltd., Shenzhen, Guangdong 518129 (CN)
(72) Inventor: ZHANG, Chengchen, Shenzhen, Guangdong 518129 (CN); ZONG, Zaifeng, Shenzhen, Guangdong 518129 (CN); LI, Guanglei, Shenzhen, Guangdong 518129 (CN)
(74) Representative: Goddar, Heinz J.
(86) International application number: PCT/CN2023/082690
(87) International publication number: WO 2023/213149

(57) **Abstract**

This application provides a communication method and an apparatus. The communication method includes: A terminal device in a satellite service range receives first indication information indicating the terminal device to notify a network when the terminal device is in an idle state or a suspended state and is about to leave the satellite service range. The terminal device in the idle state or the suspended state determines that the terminal device is about to leave the satellite service range, and in this case, reports second indication information indicating that the terminal device is about to leave the satellite service range. In this way, a network side learns whether the terminal device in the idle state or the suspended state has left the satellite service range, thereby avoiding invalid paging.

## Description

This application claims priority to Chinese Patent Application No. 202210482392.4, filed with the China National Intellectual Property Administration on May 5, 2022 and entitled "COMMUNICATION METHOD AND APPARATUS", which is incorporated herein by reference in its entirety.

### TECHNICAL FIELD

This application relates to the communication field, and more specifically, to a communication method and an apparatus.

### BACKGROUND

With development of satellite communication technologies, a terminal device may access a network through a satellite (for example, access an access network device through the satellite) based on the satellite communication technologies. When the terminal device accesses the network through the satellite, the terminal device needs to be in a coverage of the satellite. In some cases, the terminal device may be out of the coverage of the satellite for a period of time (for example, at an initial stage of satellite deployment, in a sparse scenario in which satellites cannot completely cover the surface of the earth). Such a scenario in which the terminal device may be out of the coverage of the satellite for a period of time is referred to as a discontinuous coverage scenario.

In a current method for paging a terminal device in a discontinuous coverage scenario, a core network sets duration of a reachable timer to be longer than coverage duration of the satellite, to avoid a waste of resources caused by still paging the terminal device when the terminal device is out of the coverage of the satellite. However, the coverage duration of the satellite may be inaccurately estimated. As a result, when the reachable timer does not expire and the terminal device has not been within the coverage of the satellite, the terminal device fails to be paged. Therefore, in the discontinuous coverage scenario, how to improve paging performance becomes an urgent problem to be resolved.

### SUMMARY

This application provides a communication method, to avoid invalid paging.

According to a first aspect, a communication method is provided. The method may be performed by a terminal device, or may be performed by a component (for example, a chip or a circuit) of the terminal device. This is not limited. For ease of description, the following uses an example in which the method is performed by the terminal device for description.

The method includes: The terminal device receives first indication information, where the first indication information indicates the terminal device to notify a network when the terminal device is in an idle state or a suspended state and is about to leave a satellite service range. The terminal device in the idle state or the suspended state determines that the terminal device is about to leave the satellite service range. The terminal device sends second indication information, where the second indication information indicates that the terminal device is about to leave the satellite service range or is used to request to use a power saving mode. The terminal device accesses the network through a satellite, and cannot access the network through the satellite within first duration after the terminal device leaves the satellite service range.

The suspended state may be a state in which the terminal device and an access network device store a context of the terminal device after an access network (access network, AN) connection is released. The suspended state includes but is not limited to: a radio resource control (radio resource control, RRC) inactive state or an idle with suspend state. In this application, the RRC inactive state or the idle with suspend state indicates the suspended state.

In addition, the terminal device using the power saving mode does not need to listen to paging when the terminal device is in the idle state. It may also be understood that the second indication information indicates that the terminal device does not need to listen to paging when the terminal device is in the idle state or the suspended state. The power saving mode includes but is not limited to a mobile initiated connection only mode (Mobile Initiated Connection Only (MICO) mode), a power saving mode (Power Saving Mode, PSM), and the like.

Based on the foregoing technical solution, when the terminal device is in the idle state or the suspended state, the terminal device determines, based on the received first indication information, whether the terminal device is about to leave the satellite service range, and when the terminal device is about to leave the satellite service range, the terminal device reports, via the second indication information, that the terminal device is about to leave the satellite service range, so that a network side learns whether the terminal device in the idle state or the suspended state has left the satellite service range, thereby avoiding invalid paging.

Alternatively, the second indication information is used to request to use the power saving mode. If the network side that receives the second indication information supports and accepts the use of the power saving mode, from the perspective of the network side, the terminal device is in an unreachable state like the idle state or the suspended state, thereby avoiding invalid paging.

With reference to the first aspect, in some implementations of the first aspect, that the terminal device in the idle state or the suspended state determines that the terminal device is about to leave the satellite service range includes: The terminal device in the idle state or the suspended state determines, based on location information of the terminal device and ephemeris information, that the terminal device is about to leave the satellite service range.

Based on the foregoing technical solution, the terminal device in embodiments of this application is a terminal device capable of determining whether the terminal device is to leave the satellite service range. For example, the terminal device may determine, based on the location information of the terminal device and ephemeris information of a satellite, whether the terminal device is to leave the satellite service range, so that the terminal device itself determines, without relying on a capability of another device, whether the terminal device is in the satellite service range.

With reference to the first aspect, in some implementations of the first aspect, that the terminal device receives first indication information includes: The terminal device receives the first indication information from the access network device.

Based on the foregoing technical solution, the terminal device may receive the first indication information from the access network device. In other words, in this application, the access network device is capable of indicating the terminal device to notify the network when the terminal device is in the idle state or the suspended state and is about to leave the satellite service range. Therefore, current signaling exchange between the access network device and the terminal device may be used to indicate the terminal device in the idle state or the suspended state to report that the terminal device is about to leave the satellite service range, thereby improving backward compatibility of the solution.

With reference to the first aspect, in some implementations of the first aspect, the first indication information is carried in a first message, and the first message further includes at least one of the following information: service range assistance information, service range determining periodicity information, or suspension indication information, where the first message indicates the terminal device to release an access network AN connection, the service range assistance information is used to assist the terminal device in determining whether the terminal device is about to leave the satellite service range, the service range determining periodicity information indicates a periodicity in which the terminal device determines whether the terminal device is about to leave the satellite service range, and the suspension indication information indicates the terminal device to enter the suspended state.

Based on the foregoing technical solution, when the access network device indicates the terminal device in the idle state or the suspended state to report that the terminal device is about to leave the satellite service range, some assistance information may further be provided to help the terminal device determine whether to leave the satellite service range.

With reference to the first aspect, in some implementations of the first aspect, the first message is an RRC release message, and the second indication information is carried in an RRC resume message.

Based on the foregoing technical solution, the first indication information may be included in the RRC release message in a current RRC release procedure, to indicate the terminal device in the idle state or the suspended state to report that the terminal device is about to leave the satellite service range, thereby reducing signaling overheads.

With reference to the first aspect, in some implementations of the first aspect, that the terminal device receives first indication information includes: The terminal device receives the first indication information from a mobility management function network element.

Based on the foregoing technical solution, the terminal device may receive the first indication information from the mobility management function network element. In other words, in this application, the mobility management function network element is capable of indicating the terminal device to notify the network when the terminal device is in the idle state or the suspended state and is about to leave the satellite service range. Therefore, signaling transmission between the access network device and the terminal device may not need to be changed, to prevent the access network device from making a change to indicate the terminal device to report that the terminal device is about to leave the satellite service range.

With reference to the first aspect, in some implementations of the first aspect, the first indication information is carried in a second message, and the second message further includes service range assistance information and/or service range determining periodicity information, where the service range assistance information is used to assist the terminal device in determining whether the terminal device is about to leave the satellite service range, and the service range determining periodicity information indicates a periodicity in which the terminal device determines whether the terminal device is about to leave the satellite service range.

Based on the foregoing technical solution, when the mobility management function network element indicates the terminal device in the idle state or the suspended state to report that the terminal device is about to leave the satellite service range, some assistance information may further be provided to help the terminal device determine whether to leave the satellite service range.

With reference to the first aspect, in some implementations of the first aspect, the second message is a registration response message, and the second indication information is carried in a non-access stratum (non-access stratum, NAS) message.

Based on the foregoing technical solution, the first indication information may be newly included in the registration response message in a current registration procedure, to indicate the terminal device in the idle state or the suspended state to report that the terminal device is about to leave the satellite service range, thereby reducing signaling overheads.

With reference to the first aspect, in some implementations of the first aspect, that the terminal device sends second indication information includes: The terminal device sends the second indication information to the access network device and/or the mobility management function network element.

According to a second aspect, a communication method is provided. The method may be performed by an access network device, or may be performed by a component (for example, a chip or a circuit) of the access network device. This is not limited. For ease of description, the following uses an example in which the method is performed by the access network device for description.

The method includes: The access network device sends first indication information to a terminal device, where the first indication information indicates the terminal device to notify a network when the terminal device is in an idle state or a suspended state and is about to leave a satellite service range. The access network device receives second indication information from the terminal device, where the second indication information indicates that the terminal device is about to leave the satellite service range or is used to request to use a power saving mode. The terminal device accesses the network through a satellite, and cannot access the network through the satellite within first duration after the terminal device leaves the satellite service range.

Based on the foregoing technical solution, the access network device may send the first indication information to the terminal device for indicating the terminal device to notify the network when the terminal device is in the idle state or the suspended state and is about to leave the satellite service range. When the terminal device is about to leave the satellite service range, the terminal device reports, via the second indication information, that the terminal device is about to leave the satellite service range, so that a network side learns whether the terminal device in the idle state or the suspended state has left the satellite service range, thereby avoiding invalid paging.

Alternatively, the second indication information is used to request to use the power saving mode. If the network side that receives the second indication information supports and accepts the use of the power saving mode, from the perspective of the network side, the terminal device is in an unreachable state like the idle state or the suspended state, thereby avoiding invalid paging.

In addition, current signaling exchange between the access network device and the terminal device may be used to indicate the terminal device in the idle state or the suspended state to report that the terminal device is about to leave the satellite service range, thereby improving backward compatibility of the solution.

With reference to the second aspect, in some implementations of the second aspect, the method further includes: The access network device sends third indication information to the mobility management function network element, where the third indication information indicates that the terminal device is about to leave the satellite service range or indicates the terminal device to request to use the power saving mode.

Based on the foregoing technical solution, the access network device may report, to the mobility management function network element via the third indication information, a state in which the terminal device is about to leave the satellite service range or requests to use the power saving mode, so that the mobility management function network element learns that the terminal device is about to be in the unreachable state like the idle state or the suspended state, thereby avoiding invalid paging.

With reference to the second aspect, in some implementations of the second aspect, the first indication information is carried in a first message, and the first message further includes at least one of the following information: service range assistance information, service range determining periodicity information, or suspension indication information, where the first message indicates the terminal device to release an access network AN connection, the service range assistance information is used to assist the terminal device in determining whether the terminal device is about to leave the satellite service range, the service range determining periodicity information indicates a periodicity in which the terminal device determines whether the terminal device is about to leave the satellite service range, and the suspension indication information indicates the terminal device to enter the suspended state.

Based on the foregoing technical solution, when the access network device indicates the terminal device in the idle state or the suspended state to report that the terminal device is about to leave the satellite service range, some assistance information may further be provided to help the terminal device determine whether to leave the satellite service range.

With reference to the second aspect, in some implementations of the second aspect, the first message is an RRC release message, and the second indication information is carried in an RRC resume message.

Based on the foregoing technical solution, the first indication information may be included in the RRC release message in a current RRC release procedure, to indicate the terminal device in the idle state or the suspended state to report that the terminal device is about to leave the satellite service range, thereby reducing signaling overheads.

With reference to the second aspect, in some implementations of the second aspect, before that the access network device sends first indication information to a terminal device, the method further includes: The access network device determines that the terminal device is in the satellite service range and the terminal device is inactive; or the access network device determines that the terminal device is in the satellite service range, and receives information indicating that the terminal device needs to release the AN connection.

Based on the foregoing technical solution, before indicating the terminal device to notify the network when the terminal device is in the idle state or the suspended state and is about to leave the satellite service range, the access network device may determine, by itself or based on the received indication information, that the terminal device is in the satellite service range and the terminal device is inactive. In other words, the access network device may determine that the terminal device is currently in the satellite service range, but is about to be in the idle state or the suspended state.

With reference to the second aspect, in some implementations of the second aspect, before that the access network device sends first indication information to a terminal device, the method further includes: The access network device receives fourth indication information from the mobility management function network element, where the fourth indication information indicates the access network device to request the terminal device to notify the network when the terminal device is about to leave the satellite service range.

Based on the foregoing technical solution, the access network device may determine, based on the fourth indication information received from the mobility management function network element, to indicate the terminal device to notify the network when the terminal device is in the idle state or the suspended state and is about to leave the satellite service range.

According to a third aspect, a communication method is provided. The method may be performed by a mobility management function network element, or may be performed by a component (for example, a chip or a circuit) of the mobility management function network element. This is not limited. For ease of description, the following uses an example in which the method is performed by the mobility management function network element for description.

The method includes: The mobility management function network element sends first indication information to a terminal device, where the first indication information indicates the terminal device to notify a network when the terminal device is in an idle state or a suspended state and is about to leave a satellite service range. The mobility management function network element receives second indication information from the terminal device, and/or the mobility management function network element receives third indication information from an access network device, where the second indication information and the third indication information each indicate that the terminal device is about to leave the satellite service range or indicate the terminal device to request to use a power saving mode. The terminal device accesses the network through a satellite, and cannot access the network through the satellite within first duration after the terminal device leaves the satellite service range.

Based on the foregoing technical solution, the mobility management function network element may send the first indication information to the terminal device for indicating the terminal device to notify the network when the terminal device is in the idle state or the suspended state and is about to leave the satellite service range. When the terminal device is about to leave the satellite service range, the terminal device reports, via the second indication information, that the terminal device is about to leave the satellite service range, so that a network side learns whether the terminal device in the idle state or the suspended state has left the satellite service range, thereby avoiding invalid paging.

Alternatively, the second indication information is used to request to use the power saving mode. If the network side that receives the second indication information supports and accepts the use of the power saving mode, from the perspective of the network side, the terminal device is in an unreachable state like the idle state or the suspended state, thereby avoiding invalid paging.

In addition, the mobility management function network element is capable of indicating the terminal device to notify the network when the terminal device is in the idle state or the suspended state and is about to leave the satellite service range. Therefore, signaling transmission between the access network device and the terminal device may not need to be changed, to prevent the access network device from making a change to indicate the terminal device to report that the terminal device is about to leave the satellite service range.

With reference to the third aspect, in some implementations of the third aspect, the first indication information is carried in a second message, and the second message further includes service range assistance information and/or service range determining periodicity information, where the service range assistance information is used to assist the terminal device in determining whether the terminal device is about to leave the satellite service range, and the service range determining periodicity information indicates a periodicity in which the terminal device determines whether the terminal device is about to leave the satellite service range.

Based on the foregoing technical solution, when indicating the terminal device in the idle state or the suspended state to report that the terminal device is about to leave the satellite service range, the mobility management function network element AMF may further provide some assistance information to help the terminal device determine whether to leave the satellite service range.

With reference to the third aspect, in some implementations of the third aspect, the second message is a registration response message, and the second indication information is carried in a NAS message.

Based on the foregoing technical solution, the first indication information may be included in the registration response message in a current registration procedure, to indicate the terminal device in the idle state or the suspended state to report that the terminal device is about to leave the satellite service range, thereby reducing signaling overheads.

With reference to the third aspect, in some implementations of the third aspect, the method further includes: The mobility management function network element sends fourth indication information to the access network device, where the fourth indication information indicates the access network device to request the terminal device to notify the network when the terminal device is about to leave the satellite service range.

Based on the foregoing technical solution, the mobility management function network element may send, to the access network device, the fourth indication information indicating the access network device to request the terminal device to notify the network when the terminal device is about to leave the satellite service range. In other words, the mobility management function network element may notify the access network device, so that the access network device may determine, based on the fourth indication information received from the mobility management function network element, to indicate the terminal device to notify the network when the terminal device is in the idle state or the suspended state and is about to leave the satellite service range.

With reference to the third aspect, in some implementations of the third aspect, before that the mobility management function network element sends fourth indication information to the access network device, the method further includes: The mobility management function network element determines that the terminal device is in the satellite service range.

Based on the foregoing technical solution, before sending the fourth indication information to the access network device, the mobility management function network element may determine that the terminal device is in the satellite service range, to avoid a failure of subsequently sending indication information to the terminal device by the access network device.

According to a fourth aspect, a communication apparatus is provided. The apparatus is configured to perform the method in the first aspect. Specifically, the communication apparatus may include units and/or modules, for example, a processing unit and an obtaining unit, configured to perform the method provided in any one of the foregoing implementations of the first aspect.

In an implementation, the transceiver unit may be a transceiver or an input/output interface, and the processing unit may be at least one processor. Optionally, the transceiver may be a transceiver circuit. Optionally, the input/output interface may be an input/output circuit.

In another implementation, the transceiver unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a fifth aspect, a communication apparatus is provided. The apparatus is configured to perform the method in the second aspect. Specifically, the communication apparatus may include units and/or modules, for example, a processing unit and an obtaining unit, configured to perform the method in the second aspect.

In an implementation, the transceiver unit may be a transceiver or an input/output interface, and the processing unit may be at least one processor. Optionally, the transceiver may be a transceiver circuit. Optionally, the input/output interface may be an input/output circuit.

In another implementation, the transceiver unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a sixth aspect, a communication apparatus is provided. The apparatus is configured to perform the method in the third aspect. Specifically, the communication apparatus may include units and/or modules, for example, a processing unit and an obtaining unit, configured to perform the method in the third aspect.

In an implementation, the transceiver unit may be a transceiver or an input/output interface, and the processing unit may be at least one processor. Optionally, the transceiver may be a transceiver circuit. Optionally, the input/output interface may be an input/output circuit.

In another implementation, the transceiver unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a seventh aspect, this application provides a processor, configured to perform the method provided in any one of the implementations of the first aspect to the third aspect.

Unless otherwise specified, or if operations such as sending and obtaining/receiving related to the processor do not conflict with actual functions or internal logic in related descriptions, the operations may be understood as operations such as outputting, receiving, and inputting performed by the processor, or may be understood as sending and receiving operations performed by a radio frequency circuit and an antenna. This is not limited in this application.

According to an eighth aspect, a computer-readable storage medium is provided. The computer-readable storage medium stores program code executed by a device, and the program code is used to perform the method in any one of the implementations of the first aspect to the third aspect.

According to a ninth aspect, a computer program product including instructions is provided. When the computer program product is run on a computer, the computer is enabled to perform the method in any one of the implementations of the first aspect to the third aspect.

According to a tenth aspect, a chip is provided. The chip includes a processor and a communication interface, and the processor reads, through the communication interface, instructions stored in a memory, to perform the method in any one of the implementations of the first aspect to the third aspect.

Optionally, in an implementation, the chip further includes the memory. The memory stores a computer program or the instructions, the processor is configured to execute the computer program or the instructions stored in the memory, and when the computer program or the instructions are executed, the processor is configured to perform the method in any one of the implementations of the first aspect to the third aspect.

According to an eleventh aspect, a communication system is provided, including any multiple communication apparatuses in the communication apparatuses in the fourth aspect to the sixth aspect.

According to a twelfth aspect, a communication method is provided. The method may be performed by a terminal device, or may be performed by a component (for example, a chip or a circuit) of the terminal device. This is not limited. For ease of description, the following uses an example in which the method is performed by the terminal device for description.

The method includes: The terminal device determines, based on a local configuration, to notify a network when the terminal device is in an idle state or a suspended state and is about to leave a satellite service range. The terminal device in the idle state or the suspended state determines that the terminal device is about to leave the satellite service range. The terminal device sends second indication information, where the second indication information indicates that the terminal device is about to leave the satellite service range or is used to request to use a power saving mode. The terminal device accesses the network through a satellite, and cannot access the network through the satellite within first duration after the terminal device leaves the satellite service range.

Based on the foregoing technical solution, when the terminal device is in the idle state or the suspended state, the terminal device determines, based on the local configuration, whether the terminal device is about to leave the satellite service range, and when the terminal device is about to leave the satellite service range, the terminal device reports, via the second indication information, that the terminal device is about to leave the satellite service range, so that a network side learns whether the terminal device in the idle state or the suspended state has left the satellite service range, thereby avoiding invalid paging.

Alternatively, the second indication information is used to request to use the power saving mode. If the network side that receives the second indication information supports and accepts the use of the power saving mode, from the perspective of the network side, the terminal device is in an unreachable state like the idle state or the suspended state, thereby avoiding invalid paging.

With reference to the twelfth aspect, in some implementations of the twelfth aspect, that the terminal device sends second indication information includes: The terminal device sends the second indication information to the access network device and/or the mobility management function network element.

Based on the foregoing technical solution, there may be a plurality of paths for reporting the second indication information by the terminal device, thereby improving flexibility of the solution.

With reference to the twelfth aspect, in some implementations of the twelfth aspect, the second indication information is carried in a NAS message, or the second indication information is carried in an RRC resume message.

Based on the foregoing technical solution, the terminal device may report the second indication information via different signaling, thereby improving flexibility of the solution.

According to a thirteenth aspect, a communication method is provided. The method may be performed by an access network device, or may be performed by a component (for example, a chip or a circuit) of the access network device. This is not limited. For ease of description, the following uses an example in which the method is performed by the access network device for description.

The method includes: The access network device receives second indication information from the terminal device, where the second indication information indicates that the terminal device is about to leave the satellite service range or is used to request to use a power saving mode. The access network device sends third indication information to the mobility management function network element, where the third indication information indicates that the terminal device is about to leave the satellite service range or indicates the terminal device to request to use the power saving mode. The terminal device accesses the network through a satellite, and cannot access the network through the satellite within first duration after the terminal device leaves the satellite service range.

Based on the foregoing technical solution, when the terminal device is about to leave the satellite service range, the terminal device reports, to the access network device via the second indication information, that the terminal device is about to leave the satellite service range, and the access network device may report, to the mobility management function network element via the third indication information, a state in which the terminal device is about to leave the satellite service range or requests to use the power saving mode, so that a network side learns whether the terminal device in an idle state or a suspended state has left the satellite service range, thereby avoiding invalid paging.

Alternatively, the second indication information is used to request to use the power saving mode. If the network side that receives the second indication information supports and accepts the use of the power saving mode, from the perspective of the network side, the terminal device is in an unreachable state like the idle state or the suspended state, thereby avoiding invalid paging.

With reference to the thirteenth aspect, in some implementations of the thirteenth aspect, the second indication information is carried in an RRC resume message.

Based on the foregoing technical solution, the second indication information may be included in the RRC resume message in a current RRC resume procedure, so that the terminal device in the idle state or the suspended state reports the second indication information, thereby reducing signaling overheads.

According to a fourteenth aspect, a communication method is provided. The method may be performed by a mobility management function network element, or may be performed by a component (for example, a chip or a circuit) of the mobility management function network element. This is not limited. For ease of description, the following uses an example in which the method is performed by the mobility management function network element for description.

The method includes: The mobility management function network element receives second indication information from a terminal device, and/or the AMF receives third indication information from an access network device, where the second indication information and the third indication information each indicate that the terminal device is about to leave a satellite service range or indicate the terminal device to request to use a power saving mode. The mobility management function network element determines a paging policy based on the second indication information and/or the third indication information. The terminal device accesses the network through a satellite, and cannot access the network through the satellite within first duration after the terminal device leaves the satellite service range.

Based on the foregoing technical solution, when the terminal device is about to leave the satellite service range, the terminal device reports, to the mobility management function network element via the second indication information, that the terminal device is about to leave the satellite service range, or the access network device may report, to the mobility management function network element via the third indication information, a state in which the terminal device is about to leave the satellite service range or requests to use the power saving mode, so that a network side learns whether the terminal device in an idle state or a suspended state has left the satellite service range, thereby avoiding invalid paging.

Alternatively, the second indication information is used to request to use the power saving mode. If the network side that receives the second indication information supports and accepts the use of the power saving mode, from the perspective of the network side, the terminal device is in an unreachable state like the idle state or the suspended state, thereby avoiding invalid paging. With reference to the fourteenth aspect, in some implementations of the fourteenth aspect, the second indication information is carried in a NAS message.

According to a fifteenth aspect, a communication apparatus is provided. The apparatus is configured to perform the method in the twelfth aspect. Specifically, the communication apparatus may include units and/or modules, for example, a processing unit and an obtaining unit, configured to perform the method provided in any one of the foregoing implementations of the twelfth aspect.

In an implementation, the transceiver unit may be a transceiver or an input/output interface, and the processing unit may be at least one processor. Optionally, the transceiver may be a transceiver circuit. Optionally, the input/output interface may be an input/output circuit.

In another implementation, the transceiver unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

Specifically, the communication apparatus includes: a processing unit, configured to determine, based on a local configuration, to notify a network when a terminal device is in an idle state or a suspended state and is about to leave a satellite service range, where the processing unit is further configured to determine that the terminal device in the idle state or the suspended state is about to leave the satellite service range; and a sending unit, configured to send second indication information, where the second indication information indicates that the terminal device is about to leave the satellite service range or is used to request to use a power saving mode. The terminal device accesses the network through a satellite, and cannot access the network through the satellite within first duration after the terminal device leaves the satellite service range.

According to a sixteenth aspect, a communication apparatus is provided. The apparatus is configured to perform the method in the thirteenth aspect. Specifically, the communication apparatus may include units and/or modules, for example, a processing unit and an obtaining unit, configured to perform the method provided in any one of the foregoing implementations of the thirteenth aspect.

In an implementation, the transceiver unit may be a transceiver or an input/output interface, and the processing unit may be at least one processor. Optionally, the transceiver may be a transceiver circuit. Optionally, the input/output interface may be an input/output circuit.

In another implementation, the transceiver unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

Specifically, the communication apparatus includes: a receiving unit, configured to receive second indication information from a terminal device, where the second indication information indicates that the terminal device is about to leave the satellite service range or is used to request to use a power saving mode; and a sending unit, configured to send third indication information to a mobility management function network element, where the third indication information indicates that the terminal device is about to leave the satellite service range or indicates the terminal device to request to use the power saving mode, where the terminal device accesses the network through a satellite, and cannot access the network through the satellite within first duration after the terminal device leaves the satellite service range.

According to a seventeenth aspect, a communication apparatus is provided. The apparatus is configured to perform the method in the fourteenth aspect. Specifically, the communication apparatus may include units and/or modules, for example, a processing unit and an obtaining unit, configured to perform the method provided in any one of the foregoing implementations of the fourteenth aspect.

In an implementation, the transceiver unit may be a transceiver or an input/output interface, and the processing unit may be at least one processor. Optionally, the transceiver may be a transceiver circuit. Optionally, the input/output interface may be an input/output circuit.

In another implementation, the transceiver unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

Specifically, the communication apparatus includes: a receiving unit, configured to receive second indication information from a terminal device, and/or receive third indication information from an access network device, where the second indication information and the third indication information each indicate that the terminal device is about to leave a satellite service range or indicate the terminal device to request to use a power saving mode; and a processing unit, configured to determine a paging policy based on the second indication information and/or the third indication information. The terminal device accesses the network through a satellite, and cannot access the network through the satellite within first duration after the terminal device leaves the satellite service range.

According to an eighteenth aspect, this application provides a processor, configured to perform the method provided in any one of the implementations of the twelfth aspect to the fourteenth aspect.

Unless otherwise specified, or if operations such as sending and obtaining/receiving related to the processor do not conflict with actual functions or internal logic in related descriptions, the operations may be understood as operations such as outputting, receiving, and inputting performed by the processor, or may be understood as sending and receiving operations performed by a radio frequency circuit and an antenna. This is not limited in this application.

According to a nineteenth aspect, a computer-readable storage medium is provided. The computer-readable storage medium stores program code executed by a device, and the program code is used to perform the method in any one of the implementations of the twelfth aspect to the fourteenth aspect.

According to a twentieth aspect, a computer program product including instructions is provided. When the computer program product is run on a computer, the computer is enabled to perform the method in any one of the implementations of the twelfth aspect to the fourteenth aspect.

According to a twenty-first aspect, a chip is provided. The chip includes a processor and a communication interface, and the processor reads, through the communication interface, instructions stored in a memory, to perform the method in any one of the implementations of the twelfth aspect to the fourteenth aspect.

Optionally, in an implementation, the chip further includes the memory. The memory stores a computer program or the instructions, the processor is configured to execute the computer program or the instructions stored in the memory, and when the computer program or the instructions are executed, the processor is configured to perform the method in any one of the implementations of the twelfth aspect to the fourteenth aspect.

According to a twenty-second aspect, a communication system is provided, including any multiple communication apparatuses in the communication apparatuses in the fifteenth aspect to the seventeenth aspect.

### BRIEF DESCRIPTION OF DRAWINGS

FIG. 1 is a diagram of an architecture of a 5G system to which an embodiment of this application is applicable;
FIG. 2 is a schematic flowchart of a communication method according to this application;
FIG. 3 is a schematic flowchart of another communication method according to this application;
FIG. 4 is a schematic flowchart of still another communication method according to this application;
FIG. 5 is a schematic flowchart of yet another communication method according to this application;
FIG. 6 is a block diagram of an apparatus 600 according to an embodiment of this application; and
FIG. 7 is a block diagram of an apparatus 700 according to an embodiment of this application.

### DESCRIPTION OF EMBODIMENTS

The following describes technical solutions of embodiments in this application with reference to accompanying drawings.

The technical solutions in embodiments of this application may be applied to various communication systems, for example, a 5G system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions in embodiments of this application may be further applied to a device-to-device (device-to-device, D2D) communication, a vehicle-to-everything (vehicle-to-everything, V2X) communication, a machine to machine (machine to machine, M2M) communication, a machine type communication (machine type communication, MTC), and an internet of things (internet of things, IoT) communication system, or another communication system.

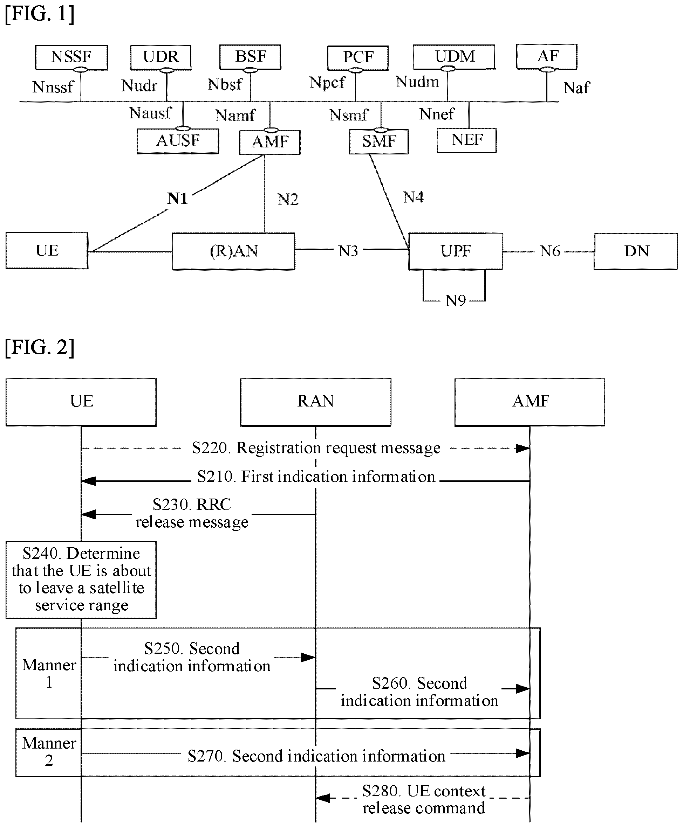

For ease of understanding embodiments of this application, a communication system to which embodiments of this application are applicable is first briefly described with reference to FIG. 1.

As example description, FIG. 1 is a diagram of an architecture of a 5G system to which an embodiment of this application is applicable. FIG. 1 is a diagram of a 5G network architecture based on a service-oriented interface. As shown in FIG. 1, the network architecture may include but is not limited to the following network elements (or referred to as function network elements, function entities, nodes, devices, or the like):

user equipment (user equipment, UE), a (radio) access network (radio access network, (R)AN) device, an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, an application function (application function, AF) network element, a data network (data network, DN), a network slice selection function (network slice selection function, NSSF), an authentication server function (authentication server function, AUSF), a network exposure function (network exposure function, NEF) network element, a binding support function (binding support function, BSF) network element, a unified data repository (unified data repository, UDR), and the like.

The following briefly describes the network elements shown in FIG. 1.
1. A UE may include various handheld devices, vehicle-mounted devices, wearable devices, or computing devices that have a wireless communication function, or other processing devices connected to a wireless modem, and various forms of terminal devices, mobile stations (mobile stations, MSs), terminals (terminals), soft terminals, or the like, for example, water meters, electricity meters, and sensors.

For example, user equipment in embodiments of this application may be an access terminal, a user unit, a user station, a mobile station, a relay station, a remote station, a remote terminal, a mobile device, a user terminal (user terminal), a terminal equipment (terminal equipment), a wireless communication device, a user agent, or a user apparatus. The user equipment may also be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, user equipment in a 5G network, or user equipment in a future evolved public land mobile network (public land mobile network, PLMN) or user equipment in future internet of vehicles, or the like. This is not limited in embodiments of this application.

By way of example rather than limitation, in embodiments of this application, the wearable device may also be referred to as a wearable intelligent device, and is a general term of a wearable device developed by intelligently designing daily wear by using a wearable technology, such as glasses, gloves, watches, clothing, and shoes. The wearable device is a portable device that can be directly worn on a body or integrated into clothes or an accessory of a user. The wearable device is not merely a hardware device, but also implements a powerful function through software support, data exchange, and cloud interaction. In a broad sense, intelligent wearable devices include full-featured and large-size devices that can implement all or some functions without depending on smartphones, for example, smart watches or smart glasses, and devices that focuses on only one type of application and need to be used together with other devices such as smartphones, for example, various smart bands and smart jewelry for monitoring physical signs.

In addition, the user equipment in embodiments of this application may alternatively be user equipment in an internet of things (Internet of Things, IoT) system. IoT is an important part of development of future information technologies. A main technical feature of the IoT is to connect objects to networks by using a communication technology, to implement an intelligent network of human-machine interconnection and thing-thing interconnection. In embodiments of this application, an IoT technology can implement massive connection, deep coverage, and terminal power saving by using, for example, a narrowband (narrow band, NB) technology.

In addition, in embodiments of this application, the user equipment may further include sensors, mainly configured for collecting data (for some user equipments), receiving control information and downlink data of an access network device, sending an electromagnetic wave, and transmitting uplink data to the access network device.

In embodiments of this application, an apparatus configured to implement a function of the user equipment may be user equipment, or may be an apparatus that can support the user equipment in implementing the functions, for example, a chip system, or a combined component or device that can implement the functions of the user equipment. The apparatus may be installed in the user equipment.

In embodiments of this application, the chip system may include a chip, or may include a chip and another discrete component. In the technical solutions provided in embodiments of this application, an example in which the apparatus configured to implement functions of the user equipment is user equipment is used for describing the technical solutions provided in embodiments of this application.

2. A (R)AN is used to provide a network access function for authorized user equipment in a specific area, and can use transmission tunnels of different quality of service based on levels of the user equipment, service requirements, and the like.

The (R)AN can manage radio resources and provide an access service for user equipment, to forward a control signal and user equipment data between the user equipment and a core network. The (R)AN may also be understood as a base station in a conventional network.

For example, the access network device in embodiments of this application may be any communication device that has a wireless transceiver function for communicating with the user equipment. The access network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, HeNB, or a home NodeB, HNB), a baseband unit (baseband unit, BBU), and an access point (access point, AP), a wireless relay node, a wireless backhaul node, a transmission point (transmission point, TP), a transmission and reception point (transmission and reception point, TRP), or the like in a wireless fidelity (wireless fidelity, Wi-Fi) system. Alternatively, the access network device may be a gNB or a transmission point (TRP or TP) in a 5G system such as an NR system, may be one antenna panel or a group of antenna panels (including a plurality of antenna panels) of a base station in a 5G system, or may be a network node, for example, a baseband unit (BBU) or a distributed unit (distributed unit, DU), that constitutes a gNB or a transmission point, and the like.

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the access network device may be a device including one or more of a CU node, a DU node, and an AAU node. In addition, the CU may be classified as an access network device in an access network (radio access network, RAN), or the CU may be classified as an access network device in a core network (core network, CN). This is not limited in this application.

3. A UPF network element mainly includes the following user plane-related functions: data packet routing and transmission, data packet detection, service usage reporting, quality of service (quality of service, QoS) processing, lawful interception, uplink data packet detection, downlink data packet storage, and the like.

In a 5G communication system, the user plane network element may be a UPF network element. In a future communication system, the user plane network element may still be a UPF network element, or may have another name. This is not limited in this application.

4. A DN is a network for data transmission.

In the 5G communication system, the data network network element may be a DN network element. In the future communication system, the data network network element may still be the DN network element, or may have another name. This is not limited in this application.

5. An AMF network element mainly includes the following functions related to access and mobility, for example, connection management, mobility management, registration management, access authentication and authorization, reachability management, security context management, and the like.

In the 5G communication system, the access management network element may be an AMF network element. In the future communication system, the access management network element may still be the AMF network element, or may have another name. This is not limited in this application.

6. An SMF is mainly used for session management, terminal device internet protocol (internet protocol, IP) address allocation and management, selection and management of user plane functions, termination of interfaces towards policy control and charging functions, downlink data notification, and the like, downlink data notification, and the like.

In the 5G communication system, the session management network element may be an SMF network element. In the future communication system, the session management network element may still be the SMF network element, or may have another name. This is not limited in this application.
7. A PCF is configured to support a unified policy framework to govern network behavior, and provide policy rule information for a control plane function network element (for example, an AMF or SMF network element), and the like.
8. A UDM may be understood as a name of a unified data management network element in a 5G architecture. The unified data management network element mainly includes the following functions: unified data management, authentication credential processing in a 3GPP authentication and key agreement mechanism, user identity processing, access authorization, registration and mobility management, subscription management, short message management, and the like.
9. An AF is configured to provide application layer information, and may interact with a policy framework through a network exposure function network element, or directly interact with a policy framework to request for policy decision-making, and the like.
10. An NSSF mainly includes the following functions: selecting a set of network slice instances for a UE, determining allowed network slice selection assistance information (network slice selection assistance information, NSSAI), determining a set of AMFs that can serve the UE, and the like.
11. An AUSF (authentication server function) mainly includes the following functions: interaction with a unified data management network element to obtain user information, and performing an authentication-related function, for example, generating an intermediate key.
12. A BSF implements session binding. Specifically, the BSF is used by the AF to address the PCF.

When the SMF requests policy control from the PCF for a session that the UE requests to establish, the SMF provides a UE identifier, a user IP address, and other information for the PCF. The PCF registers binding information (including but not limited to the UE identifier, the user IP address, and a selected PCF identifier) with the BSF. Then, when the UE accesses a service on the AF via the session, the AF may need to request policy authorization from the PCF for the service accessed by the UE. A PCF selected by the AF for the policy authorization needs to be the consistent with a PCF selected by the SMF for the session. This is because the policy authorization generally triggers the PCF to adjust policy control for an associated session of the SMF. The AF may query the BSF for a corresponding PCF based on the user IP address or the UE identifier, and then directly request policy authorization from the AF through an N5 interface defined by 5G.

13. A UDR is mainly configured for storage and retrieval of subscription data, policy data, application data, and other types of data.

It may be understood that the foregoing network elements or function network elements may be network elements in a hardware device, software functions running on dedicated hardware, or virtualization functions instantiated on a platform (for example, a cloud platform).

14. A NEF may be understood as a name of a capability exposure network element in the 5G architecture. The capability exposure network element mainly includes the following functions: securely exposing services and capabilities provided by 3GPP network functions for third parties or internally or the like; and translation of information exchanged with the AF and information exchanged with an internal network function, for example, translation of information between an AF service identifier and internal 5G core network information such as a data network name (data network name, DNN), single network slice selection assistance information (single network slice selection assistance information, S-NSSAI), and the like.

As can be learned from FIG. 1, interfaces between control plane network elements in FIG. 1 are service-oriented interfaces.

In the architecture shown in FIG. 1, names and functions of interfaces between the network elements are as follows:
(1) N1 is an interface between the AMF and the terminal, and may be configured to transfer a QoS control rule or the like to the terminal.
(2) N2 is an interface between the AMF and the RAN, and may be configured to transfer radio bearer control information or the like from a core network side to the RAN.
(3) N3 is an interface between the RAN and the UPF, and is mainly configured to transfer uplink and downlink user plane data between the RAN and the UPF.
(4) N4 is an interface between the SMF and the UPF, and may be configured to transfer information between a control plane and a user plane, including delivering a forwarding rule, a QoS control rule, a traffic statistics rule, or the like from the control plane to the user plane, and reporting user plane information.
(5) N9 is a user plane interface between UPFs, and is configured to transfer uplink and downlink user data flows between the UPFs.
(6) Service-oriented interfaces Nnssf, Nudr, Nausf, Nbsf, Namf, Npcf, Nsmf, Nudm, Nnef, and Naf are respectively service-oriented interfaces exhibited by the NSSF, the UDR, the AUSF, the BSF, the AMF, the PCF, the SMF, the UDM, the NEF, and the AF, and are configured to invoke corresponding service-oriented operations.
(7) N6 is an interface between the UPF and the DN, and is configured to transfer uplink and downlink user data flows between the UPF and the DN.

N1, N2, N3, N4, and N6 are interface sequence numbers. For meanings of these interface sequence numbers, refer to meanings defined in the 3rd generation partnership project (3rd generation partnership project, 3GPP) standard protocol. This is not limited herein.

It should be noted that the interfaces between the control plane network elements may alternatively be point-to-point interfaces. Details are not described herein again.

It should be further understood that the AMF, the SMF, the UPF, the PCF, the UDM, and the like shown in FIG. 1 may be understood as network elements configured to implement different functions, for example, may be combined into a network slice as required. These network elements may be independent devices, may be integrated into a same device to implement different functions, may be network elements in a hardware device, may be software functions running on dedicated hardware, or may be virtualized functions instantiated on a platform (for example, a cloud platform). Specific forms of the network elements are not limited in this application.

It should be further understood that the foregoing names are defined merely for distinguishing between different functions, and should not constitute any limitation on this application. This application does not exclude a possibility that another name is used in the 5G network and another future network. For example, in the 6G network, a part or all of the foregoing network elements may still use terms in 5G, or may use other names.

It should be further understood that names of interfaces between the network elements in FIG. 1 are merely examples, and the interfaces may have other names in a specific implementation. This is not specifically limited in this application. In addition, names of messages (or signaling) transmitted between the network elements are merely examples, and do not constitute any limitation on functions of the messages.

The network architecture applicable to embodiments of this application is merely an example for description, and the network architecture applicable to embodiments of this application is not limited thereto. Any network architecture, for example, a 4G, 6G, or future communication system capable of implementing functions of the foregoing network elements is applicable to embodiments of this application.

To facilitate understanding of the technical solutions in embodiments of this application, before the solutions in embodiments of this application are described, some terms or concepts that may be used in embodiments of this application are first briefly described.

### 1. Satellite type

Satellites may be classified into geostationary equatorial orbit (geostationary equatorial orbit, GEO) satellites, non-geostationary equatorial orbit satellites, and other satellites (Other SATs) based on altitudes of satellite orbits.

The geostationary equatorial orbit satellites have an altitude of is about 35786 km, and have an advantage of a large coverage. In addition, because a movement rate of the satellites is consistent with that of the earth, the signal coverage of the geostationary equatorial orbit satellites does not move over time. However, the geostationary equatorial orbit satellites have a disadvantage of high communication delay due to the high altitude.

The non-geostationary equatorial orbit satellites have an altitude of approximately ranging from 500 km to 45000 km. The non-geostationary equatorial orbit satellites may be further classified into a low earth orbit (low earth orbit, LEO) satellite, a mid earth orbit (mid earth orbit, MEO) satellite, and a high earth orbit (high earth orbit, HEO) satellite. The high earth orbit non-geostationary equatorial orbit satellite has disadvantages that a coverage moves over time and a communication delay is high, and therefore the high earth orbit non-geostationary equatorial orbit satellite is not suitable for communication. The mid earth orbit non-geostationary equatorial orbit satellite and the low earth orbit non-geostationary equatorial orbit satellite have advantages that a delay of the satellites is lower than that of the geostationary equatorial orbit satellite, but have disadvantages that coverages are smaller than that of the geostationary equatorial orbit satellite, and the coverages move over time.

Although movement of the mid earth orbit non-geostationary equatorial orbit satellite and low earth orbit non-geostationary equatorial orbit satellite can be challenging in management, the signal delays thereof are lower. Therefore, the mid earth orbit non-geostationary equatorial orbit satellite and/or the low earth orbit non-geostationary equatorial orbit satellite are options as communication satellites for many satellite communication providers.

For example, by default, the satellite mentioned in embodiments of this application is a mid earth orbit non-geostationary equatorial orbit satellite and/or a low earth orbit non-geostationary equatorial orbit satellite, or a satellite with a low signal delay.

### 2. Satellite constellation

The satellite constellation is a set of satellites that are launched into an orbit and can normally work. Usually, the satellite constellation is a satellite network including some satellites configured in a manner. Main communication satellite constellations include an iridium satellite system, a European data relay system (European Data Relay System, EDRS), Tianlian I, StarLink (StarLink), OneWeb (OneWeb), a navigation-related global positioning system (global positioning system, GPS) satellite constellation, GLONASS (GLONASS) satellite constellation, Galileo (Galileo) satellite constellation, and BeiDou satellite constellation, and the like.

### 3. Access to a network through a satellite

In this application, the UE may access a network through a satellite, including but not limited to: The UE accesses a terrestrial RAN through the satellite, or accesses a RAN disposed on the satellite. In this application, an example in which the UE accesses the terrestrial RAN through the satellite is used for description. The satellite implements a transparent transmission function between the UE and the RAN.

It should be understood that, in a scenario in which the UE accesses the terrestrial RAN through the satellite, the UE needs to be in a service range of the satellite (in other words, the UE is in a coverage of the satellite).

It should be further understood that how the UE accesses the RAN through the satellite is not limited in this application. The foregoing manner in which the UE accesses the terrestrial RAN through the satellite is merely an example, and does not constitute any limitation on the protection scope of this application.

### 4. Discontinuous coverage scenario

For some reasons, the UE may be out of a satellite service range for a period of time.

In this application, the expression "satellite service range" may be replaced with an expression indicating a same meaning, such as "satellite coverage", "network coverage", "coverage range", "coverage", or the like.

For example, at an initial stage of satellite deployment, satellites on the satellite constellation cannot completely cover the surface of the earth as satellites are sparse. As the satellite moves, the UE may fail to be connected to the satellite within a period of time until a next satellite moves to cover the UE.

For another example, a satellite deployed in the air may be temporarily unavailable due to software update, unavailable for a long period of time due to a fault, or permanently unavailable due to recycling. As a result, the UE cannot be connected to the satellite within a period of time.

In embodiments of this application, a scenario in which the UE is out of the satellite service range for a period of time is referred to as the discontinuous coverage scenario.

### 5. Connection management status

A signaling connection status between the UE and the core network may be referred to as a connection management status. Specifically, the connection management status includes a connected state and an idle state.

When the UE is in the idle state, a connection between the UE and the core network (for example, a non-access stratum (non-access stratum, NAS) signaling connection or a NAS connection, which may also be referred to as an N1 connection in the 5G system), a connection between the UE and the access network (for example, an access network (access network, AN) signaling connection or an AN connection), a connection between the access network and a core network control plane network element (for example, the connection may be referred to as an N2 connection in the 5G system), and a connection between the access network and a core network user plane network element (for example, the connection may be referred to as an N3 connection in the 5G system) do not exist.

When the UE is in the idle state, if the AN connection is established, the UE transits from the idle state to the connected state. Alternatively, when the UE is in the connected state, if the AN connection is released, the UE transits from the connected state to the idle state.

An RRC inactive connection state is a special connection state. For ease of description, the RRC inactive connection state is referred to as an RRC inactive state for short below. Specifically, RRC supports three states, namely, an RRC idle (RRC_IDLE) state, an RRC inactive (RRC_INACTIVE) state, and an RRC connected (RRC_CONNECTED) state. An RRC state is a connection state between the UE and the RAN. When the signaling connection state between the UE and the core network is the connected state, the RRC state may be the RRC inactive state or the RRC connected state.

When the UE is in the RRC inactive state, both the UE and the RAN reserve an access stratum (access stratum, AS) context. Therefore, compared with restoration from the RRC idle state to the RRC connected state, the UE restores faster from the RRC inactive state to the RRC connected state. In addition, the UE in the RRC inactive state may maintain a power consumption level close to that in the RRC idle state.

### 6. Narrow band internet of things (Narrow Band Internet of Things, NB-IoT)

The NB-IoT is an emerging IoT technology which supports a cellular data connection of low-power devices in a wide area network, and therefore is also referred to as a low-power wide area network. The NB-IoT supports an efficient connection of a device with long standby time and a high requirement on a network connection.

### 7. UE suspension

In a possible implementation, a UE that accesses the RAN by using the NB-IoT access technology does not support the RRC inactive state. However, when releasing the AN connection, the RAN may request the UE to maintain the AS context, so that the UE enters the RRC idle state, that is, an idle with suspend (IDLE with suspend) state, but both the UE and the RAN store the AS context. Similar to the RRC inactive state, the RRC suspended state can save power, and can be quickly restored to the connected state.

In another possible implementation, for a UE that is inactive within a specific period of time, the RAN may initiate release of the AN connection, and indicate the UE to be suspended, so that the UE enters the RRC inactive state or the idle with suspend state. Alternatively, the RAN may initiate release of the AN connection, and does not indicate the UE to be suspended, so that the UE directly enters the idle state.

A state in which both the UE and the RAN store a UE context after the AN connection is released may be collectively referred to as a suspended state, which is not limited to the RRC inactive state and the idle with suspend state. In this application, the suspended state is described by using the RRC inactive state or the idle with suspend state.

In the following, the idle with suspend state and the idle state are collectively referred to as an idle state. For a core network device, based on the UE in the idle state, the AN connection between the UE and the RAN is released, and connections (for example, the N2 connection and the N3 connection) between the RAN and the core network are also released.

### 8. Registration area

After the UE registers with the network, the core network allocates a registration area to the UE and provides a registration update periodicity.

When the UE moves out of the allocated registration area, the UE initiates mobility registration update to the core network. When the UE transits from the connected state to the idle state, the UE starts a periodic registration timer, and the core network starts a reachable timer.

The reachable timer generally has duration slightly longer than that of the periodic registration timer. If the periodic registration timer expires, the UE needs to initiate periodic registration update. If periodic registration is received, the core network stops the reachable timer. If the reachable timer expires, the core network considers that the UE is unreachable and starts a deregistration timer. If the deregistration timer expires, the core network deregisters the UE.

### 9. Paging

For the UE in the idle state, if the core network wants to send information to the UE, the core network needs to request the RAN to initiate paging for the UE. A paging range is the registration area previously allocated by the core network to the UE.

For the UE in the RRC connected state, the core network may directly send information to the UE through the RAN.

For the UE in the RRC inactive state, if the RAN does not notify the core network, the core network still considers that the UE is in the RRC connected state. For the UE in the RRC inactive state, the RAN allocates a radio access network notification area (RAN notification area, RNA) to the UE. If the UE moves out of the area, the UE sends a notification to the RAN. In addition, the UE periodically sends a notification to the RAN.

To further save power for the UE, in 4G, the UE may enter a power saving mode (Power Saving Mode, PSM) after a period of time (activation duration) after entering the idle state, and in 5G, the UE may enter a mobile initiated connection only mode (Mobile Initiated Connection Only (MICO) mode) after entering the idle state. After the UE enters the PSM or the MICO mode, the UE no longer accepts paging from the RAN.

### 11. Ephemeris information

The ephemeris information of the satellite includes an orbital parameter, or a parameter like an azimuth location of the satellite calculated based on the orbital parameter. It may be understood that the ephemeris information of the satellite may be used for calculation, prediction, description, or flight state tracking of the satellite, such as time, a location, and a speed.

As can be learned from the above, in the discontinuous coverage scenario, if the UE transits from the connected state to the idle state in the satellite service range, the core network does not know whether the UE moves out of the satellite service range, and consequently, a paging failure may occur.

To avoid the paging failure, an implementation is as follows: An MME configures the periodic registration timer and the reachable timer according to a satellite operation rule, so that when the reachable timer expires, the MME determines that the UE is unreachable.

For example, when a satellite moves, duration for which the UE is covered is 20 minutes, and an interval between two satellites is 10 hours. In this case, the MME sets duration of the reachable timer to be longer than 20 minutes. This can ensure that when the reachable timer expires, the UE is definitely out of the coverage, that is, the UE is unreachable, and the MME does not need to waste resources to page the UE. When a next satellite arrives, the periodic registration timer of the UE already expires, the UE may initiate periodic registration, and the UE enters the connected state.

In this implementation, the UE enters the idle state in the satellite service range, and the RAN and the core network cannot sense whether the UE leaves the satellite service range. The RAN and the core network know, only when the reachable timer expires, that the UE has left the satellite service range. Before the expiry, if the AMF wants to page the UE, a paging failure is likely to occur even if the paging range is expanded. This is because the UE has left the entire satellite service range.

In another implementation, when determining, based on coverage information, that the UE is about to leave the satellite service range, the RAN initiates AN release, and the AMF sends information to the UE based on the ephemeris information and the like, to indicate when the UE is to exit a power saving state. In this way, when a next satellite arrives, the UE may exit the power saving state and enter the connected state.

In this implementation, that the UE enters the idle state in the satellite service range is not considered. The AN release is initiated when the UE leaves the satellite service range. This cannot prevent the UE from entering the idle state in the satellite service range, and the UE fails to be paged.

Based on the disadvantages of the foregoing implementations, embodiments of this application provide a communication method, to enhance mobility management in a scenario in which the UE enters the idle state in the satellite service range in a case of discontinuous coverage, thereby improving a paging success rate.

For ease of understanding of embodiments of this application, the following descriptions are provided.

First, in this application, "indicate" may include "directly indicating" and "indirectly indicating". When a piece of description information indicates A, the information may directly indicate A or indirectly indicate A, but it does not indicate that the information definitely carries A.

Information indicated by the information is referred to as to-be-indicated information. In a specific implementation process, the to-be-indicated information may be indicated in a plurality of manners, for example, but not limited to, a manner in which the to-be-indicated information, for example, the to-be-indicated information or an index of the to-be-indicated information may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, a common part of all pieces of information may further be identified and indicated in a unified manner, to reduce indication overheads caused by separately indicating the same information.

In addition, a function implemented by the "indication information" in embodiments of this application may be implemented by a "message". For example, the "message" does not include the "indication information", but the "message" has a function of the "indication information".

Second, the terms "first", "second", and various numerical numbers (for example, "#1" and "#2") shown in this application are merely for ease of description, and are used to distinguish between objects, but are not intended to limit the scope of embodiments of this application, for example, are used to distinguish between different messages, but are not for describing a particular order or sequence. It should be understood that the objects described in such a way are interchangeable in a proper circumstance, so that a solution other than embodiments of this application can be described.

Third, in this application, "preset" may include "predefined", for example, defined in a protocol. "Predefined" may be implemented by storing corresponding code, a table, or other related information that may be used for indication in a device (for example, including network elements) in advance. A specific implementation of "predefined" is not limited in this application.

Fourth, "storage" in embodiments of this application may be storage in one or more memories. The one or more memories may be separately disposed, or may be integrated into an encoder or a decoder, a processor, or a communication apparatus. Alternatively, some of the one or more memories may be separately disposed, and some of the one or more memories are integrated into the decoder, the processor, or the communication apparatus. A type of the memory may be a storage medium in any form. This is not limited in this application.

Fifth, the term "and/or" in this specification is merely an association relationship for describing associated objects, and indicates that three relationships may exist. For example, A and/or B may indicate the following three cases: Only A exists, both A and B exist, and only B exists. In addition, the character "/" in this specification generally indicates an "or" relationship between the associated objects.

Sixth, "protocols" in embodiments of this application may be standard protocols in the communication field, for example, may include a 5G protocol, a new radio (new radio, NR) protocol, and a related protocol applied to a future communication system. This is not limited in this application.

Without a loss of generality, the following uses interaction between devices as an example to describe in detail the communication method provided in embodiments of this application. It should be understood that the terminal device in the following embodiments is a terminal device in a discontinuous coverage scenario, and in other words, the following terminal device is out of the satellite service range within a period of time.

It should be noted that, in this application, the terminal device, the access network device, and the mobility management function network element all know that the UE is served by a satellite with discontinuous coverage.

Specifically, each device may locally configure the UE to be served by the satellite with discontinuous coverage.

Alternatively, a device determines information indicating that the UE is served by the satellite with discontinuous coverage, and sends the information to another device. For example, the access network device notifies the terminal device and the mobility management function network element of the information.

Alternatively, the terminal device, the access network device, and the mobility management function network element can determine, based on the ephemeris information, that the UE is served by the satellite with discontinuous coverage. A source of the ephemeris information is not determined. For example, the ephemeris information may be provided by the access network device for the terminal device and the mobility management function network element. Alternatively, for another example, the ephemeris information may be indirectly or directly sent by another management network element to the terminal device, the access network device, and the mobility management function network element.

For ease of description, descriptions are provided below by using an example in which the terminal device is a UE, the access network device is a RAN, and the access and mobility management function network element is an AMF.

It should be noted that a name of a network device is not limited in this application.

For example, the access and mobility management function network element may be an AMF or another network element that can implement an access and mobility management function.

The following embodiments relate to mobility management enhancement, to avoid initiation of an unnecessary UE paging procedure in the discontinuous coverage scenario (or referred to as a discontinuous coverage). Specifically, the UE may enter an idle mode when the UE is in a network coverage, and may leave a satellite coverage (or referred to as the network coverage) when the UE is in the idle mode. In this case, a network side may determine that the UE is reachable and page the UE. However, actually, the UE is not in the network coverage, and the paging fails. To avoid unnecessary paging, it is recommended that the UE in the idle mode notify the network that the UE leaves network coverage. The following describes in detail how to avoid unnecessary paging with reference to the accompanying drawings.

FIG. 2 is a schematic flowchart of a communication method according to this application. The method includes the following step:
S210. An AMF sends first indication information to a UE, in other words, the UE receives the first indication information from the AMF.

The first indication information indicates the UE to notify a network after entering an idle state or a suspended state and before leaving a satellite service range, or the first indication information indicates the UE to notify a network when the UE is in an idle state or a suspended state and is about to leave a satellite service range; or the first indication information indicates the UE in an idle state or a suspended state to notify a network when the UE is about to leave a satellite service range; or the first indication information indicates the UE to notify a network when the UE is about to leave a satellite service range; or other words, the first indication information is used to notify a network that the UE leaves a network coverage.

It may be understood that, that "the UE notifies the network when the UE is in the idle state or the suspended state and is about to leave the satellite service range" means that if the UE enters the idle state or the suspended state in the satellite service range, the UE needs to position itself and determine whether the UE is about to leave the satellite service range. In other words, the first indication information indicates that after entering the idle state or the suspended state in the satellite service range, the UE needs to position itself and determine whether the UE is about to leave the satellite service range.

It should be noted that the suspended state in this embodiment of this application is a state in which the UE and a RAN store a context of the terminal device after an AN connection is released, and includes but is not limited to the RRC inactive state or the idle with suspend state described above. For ease of description, descriptions are provided in this embodiment of this application by using an example in which the suspended state is the RRC inactive state or the idle with suspend state.

Optionally, before sending the first indication information, the AMF determines that the UE is using the RAN that provides discontinuous coverage, in other words, the AMF determines that the UE accesses the RAN through the satellite that provides discontinuous coverage.

Optionally, before sending the first indication information, the AMF determines that movement of the UE is unpredictable, in other words, the UE is not stationary, does not move in a very small range, or does not move in a manner that is predictable according to a specific rule.

Optionally, before sending the first indication information, the AMF does not receive, from the UE, indication information for requesting to use a power saving mode.

The satellite service range may be a satellite coverage, or may be a range that is in a satellite coverage and in which the UE can be served.

Optionally, the first indication information may be referred to as leaving notification indication information. It should be understood that a name of the information is not limited in this embodiment of this application, provided that a function of the information can be implemented.

In a possible implementation, descriptions are provided in this embodiment by using an example in which a registration response message sent by the AMF to the UE includes the first indication information.

In a possible implementation, the registration response message may further include service range assistance information. The service range assistance information is used to assist the UE in determining that the UE is about to leave the satellite service range.

For example, the service range assistance information includes a threshold of signal strength, a threshold of a distance between a location of the UE and an edge of the satellite service range, or the like.

For example, when the signal strength is less than the threshold, the UE may determine that the UE is about to leave the satellite service range.

Alternatively, when a minimum value of the distance between the location of the UE and the edge of the satellite service range is less than the threshold, the UE may determine that the UE is about to leave the satellite service range.

Alternatively, the UE determines, based on information such as the signal strength and the location, that the UE is about to leave the satellite service range. For example, when the signal strength is less than the threshold and the minimum value of the distance between the location of the UE and the edge of the satellite service range is less than the threshold, the UE may determine that the UE is about to leave the satellite service range.

In another possible implementation, the registration response message may further include service range determining periodicity information, where the service range determining periodicity information indicates a periodicity in which the UE determines whether the UE is about to leave the satellite service range.

For example, the UE periodically determines, based on the periodicity information, whether the signal strength is less than the threshold.

Alternatively, based on the periodicity information, the UE periodically positions the location of the UE and determines whether the minimum value of the distance between the location of the UE and the edge of the satellite service range is less than the threshold.

Optionally, the service range determining periodicity information may include one or more pieces of periodicity information. For example, periodicity information used for determining the signal strength is different from periodicity information used for determining the location.

For example, the service range determining periodicity information may be one type of the foregoing service range assistance information.

When the first indication information is carried in the registration response message, the AMF receives a registration request from the UE before sending the registration response message to the UE. A method procedure shown in FIG. 2 includes the following step:
S220. The UE sends a registration request message to the AMF, in other words, the AMF receives the registration request message from the UE.

Specifically, the registration request message is used to request to complete registration. Information included in the registration request message is not limited in this application. For example, the registration request message may not include an indication of MICO. For details, refer to descriptions of the registration request message in a current UE registration procedure.

As can be learned from steps S210 and S220, in this embodiment, the UE may obtain the first indication information during the registration, so that when the UE subsequently enters the idle state or the suspended state and is about to leave the satellite service range, second indication information is used to report a state in which the UE is about to leave the satellite service range or is used to request to use the power saving mode. This can help a core network device (for example, the AMF) formulate a paging policy.

For example, the paging policy may be that the UE that has left the satellite service range is no longer paged. Alternatively, the paging policy may be that the UE is not paged within a period of time (for example, duration that is estimated by the UE and during which the UE is not served by the satellite); or when usage of the power saving mode is supported and adopted, from a perspective of a network side, the terminal device is in an unreachable state like the idle state or the suspended state, and in this case, paging may not be initiated, thereby improving a paging success rate.

It should be understood that, in this embodiment of this application, specific content of the paging policy formulated by the AMF based on the second indication information is not limited, including but not limited to: avoiding a resource waste caused when the AMF initiates paging for the UE that has left the satellite service range.

It should be further understood that steps S210 and S220 are merely examples for describing how the AMF indicates the UE to report the second indication information when the UE is about to leave the satellite service range, and do not constitute any limitation on the protection scope of this application. For example, the AMF may further indicate the UE by using another procedure after the UE completes the registration (for example, adding a new procedure to indicate the UE; for another example, adding the first indication information to an existing procedure; for still another example, reusing existing signaling to indicate a new function, including but not limited to that a NAS message has a function of the first indication information). A specific manner is similar to a manner of indicating the UE in the registration procedure, and details are not described herein again.

Further, as can be learned from step S220, the UE learns of the first indication information, so that the UE may report the second indication information when the UE enters the idle state or the suspended state and is about to leave the satellite service range. For ease of understanding, how the UE reports the second indication information is described below with reference to subsequent steps in FIG. 2. The method procedure shown in FIG. 2 further includes the following steps:
S230. The RAN sends an RRC release message to the UE, in other words, the UE receives the RRC release message from the RAN.

Specifically, the RRC release message indicates the UE to release the AN connection. Specific content of the RRC release message is not limited in this embodiment. For details, refer to descriptions about the RRC release message sent by the RAN in current related technologies.

For example, before sending the RRC release message to the UE, the RAN may determine that the UE needs to release the AN connection.

In a possible implementation, that the RAN determines that the UE is inactive may be understood as that there is no uplink or downlink data transmission between the UE and the RAN within a period of time (for example, there is no data transmission within one second). Duration of "a period of time" is predefined in a protocol, negotiated by the UE and the RAN, configured by the RAN, or the like. This is not limited in this embodiment.

In another possible implementation, the RAN determines that an AN connection fault occurs, and the AN connection needs to be released.

In still another possible implementation, the RAN determines that the RAN cannot continue to provide a service for the UE, and the AN connection needs to be released.

In still another possible implementation, the RAN determines that the UE is in the satellite service range, and the UE needs to release the AN connection (this is not caused by inactivity of the UE). For example, the RAN determines, based on a local configuration or information from the UE and/or the AMF, that the UE needs to release the AN connection.

For example, the RAN determines a satellite service range at a current moment based on the ephemeris information and the like. If a minimum value of a distance between a location of the UE obtained last time and the edge of the satellite service range is greater than a threshold, the RAN determines that the UE is in the satellite service range, after comprehensively considering a behavior feature of the UE (also referred to as expected UE behavior information).

It should be understood that, in this embodiment of this application, a reason why the RAN determines that the AN connection is to be released is not limited. For details, refer to descriptions about the need to release the AN connection in a current or future communication technology. Details are not described herein again.

Optionally, the RRC release message may include a suspend indication, and the suspension indication information indicates the UE to enter the suspended state.

It should be further understood that in this application, before the UE determines that the UE is about to leave, if an RRC connection is released, the RRC connection release may be initiated by the UE, the RAN, or the AMF. In this application, descriptions are provided only by using an example in which the RAN initiates the RRC release.

S240. The UE determines that the UE is about to leave the satellite service range.

In this embodiment, after receiving the RRC release message, the UE enters the idle state, and in the idle state, determines that the UE is about to leave the satellite service range. Alternatively, when the RRC release message in step S230 includes the suspend indication, after receiving the RRC release message, the UE enters the suspended state, and in the suspended state, determines that the UE is about to leave the satellite service range.

For example, that the UE determines, after entering the idle state or the suspended state, that the UE is about to leave the satellite service range includes: After entering the idle state or the suspended state, the UE determines, based on some information (for example, ephemeris information, location information of the UE, and the like), that the UE is about to leave the satellite service range.

For example, if the UE moves to a place on the edge of the coverage, it indicates that the UE is about to leave the satellite service range.

For example, that the UE determines, after entering the idle state or the suspended state, that the UE is about to leave the satellite service range includes: The UE determines that the UE is about to leave the satellite service range at a first moment, where the first moment may be any moment after entering the idle state or the suspended state by the UE.

For example, the UE in the satellite service range receives the RRC release message at a moment #1, and enters the idle state at a moment #2. The UE in the idle state or the suspended state determines that the UE is about to leave the satellite service range at a moment #3 (for example, the first moment), where the moment #1 is earlier than the moment #2, and the moment #2 is earlier than the moment #3.

In a possible implementation, when the UE determines that the UE is about to leave the satellite service range, the UE is in a connected state, that is, step 230 is not performed.

In a possible implementation, the UE determines, based on the location information of the UE and the ephemeris information, that the UE is about to leave the satellite service range.

For example, a current location of the UE is a location #1, and a coverage of a satellite #1 includes the location #1 at the moment #1. As the satellite #1 and the UE move, the UE moves to a location #2 at the moment #3, and the coverage of the satellite #1 does not include the location #2 at the moment #3. The UE may learn of the coverage of the satellite #1 at different moments based on the ephemeris information, and current location information of the UE and location information after movement may be learned of through a positioning module of the UE.

It should be understood that, in this embodiment of this application, by default, the UE is capable of determining whether the UE is to leave the satellite service range.

In another possible implementation, when the registration response message further includes the service range assistance information and/or the service range determining periodicity information, the UE may consider the service range assistance information and/or the service range determining periodicity information when determining whether to leave the satellite service range.

Further, when the UE determines that the UE is about to leave the satellite service range (for example, at a future moment), the UE may notify a network device side via the second indication information. The UE may perform notification in the following two manners.

Manner 1: The UE notifies the RAN via the second indication information. In Manner 1, the method procedure shown in FIG. 2 further includes the following step:
S250. The UE sends the second indication information to the RAN, in other words, the RAN receives the second indication information from the UE.

In a possible implementation, the second indication information is used to notify the UE that the UE is about to leave the satellite service range.

For example, the second indication information is 1-bit information, and a bit value "0" indicates that the UE is about to leave the satellite service range.

It should be noted that "be about to leave" mentioned in this application may also be understood as "be leaving" or another description indicating a same meaning.

In another possible implementation, the second indication information is used to request to use a power saving mode. The power saving mode includes but is not limited to a MICO mode and a PSM. In the idle state, the UE that uses the power saving mode does not need to listen to paging. It may also be understood as that the second indication information indicates that the UE in the idle state does not need to listen to paging. In this implementation, it may be understood as that when determining that the UE is about to leave the satellite service range, the UE may report that the UE requests to use the power saving mode, so that the network side learns that the UE is about to leave the satellite service range.

For example, that the UE sends the second indication information to the RAN includes but is not limited to: The UE sends a first message to the RAN, where the first message includes the second indication information, and the first message includes any one of the following messages:
an RRC connection setup request message, an RRC data request message, an RRC resume request message, or the like.

Third indication information is used to request to use the power saving mode. The method procedure shown in FIG. 2 further includes the following step:
S260. The RAN sends the third indication information to the AMF, in other words, the AMF receives the third indication information from the RAN.

It may be understood that once the AMF receives the third indication information from the RAN, the AMF may consider that the UE is unreachable, and may no longer page the UE.

In a possible implementation, when the first message is the RRC connection setup request message, the RRC data request message, or the RRC resume request message, that the RAN sends the third indication information to the AMF includes: The RAN sends a second message to the AMF, where the second message includes the third indication information.

Optionally, the third indication information is the same as the second indication information.

Manner 2: The UE notifies the AMF via the second indication information. In Manner 2, the method procedure shown in FIG. 2 further includes the following step:
S270. The UE sends the second indication information to the AMF, in other words, the AMF receives the second indication information from the UE.

For example, the second indication information is carried in a NAS message. For example, the NAS message may be a service request message. It may be understood that once the AMF receives the second indication information from the UE, the AMF may consider that the UE is unreachable, and may no longer page the UE.

Further, after receiving the second indication information and/or the third indication information, the AMF may perform a subsequent procedure of releasing a UE context, or the AMF may indicate the RAN to release a UE context. The method procedure shown in FIG. 2 may further include the following step:
S280. The AMF sends a UE context release command to the RAN, in other words, the RAN receives the UE context release command from the AMF.

The UE context release command indicates the RAN to release the UE context.

Optionally, the UE context release command further includes power saving mode parameter information, where the power saving mode parameter information indicates an occasion for the UE to enter or exit the power saving mode.

For example, the power saving mode parameter information includes activation time, where the activation time indicates the UE to enter the power saving mode after the activation time elapses after the UE enters the idle state.

Alternatively, for another example, the power saving mode parameter information includes periodic registration timer duration, where the periodic registration timer duration indicates the UE to initiate periodic registration after the timer duration elapses after the UE enters the idle state.

For example, the AMF may determine the power saving mode parameter information based on the location information of the UE, the ephemeris information, and the like.

Specifically, after releasing the UE context, the RAN may further notify the AMF via a UE context release complete message. Because the procedure of releasing the UE context is not limited in this embodiment of this application, details are not described herein again.

It should be understood that in this application, after the UE sends the second indication information, the RRC connection, the UE context, and the like may be released in a plurality of manners. For example, the UE, the RAN, and the AMF may initiate release, or may perform local release after sending or receiving the second indication information. In this application, only an example in which the AMF initiates release is used for description.

Subsequently, if the UE enters a satellite coverage area again, the UE may send a registration request message or a service request message to the AMF.

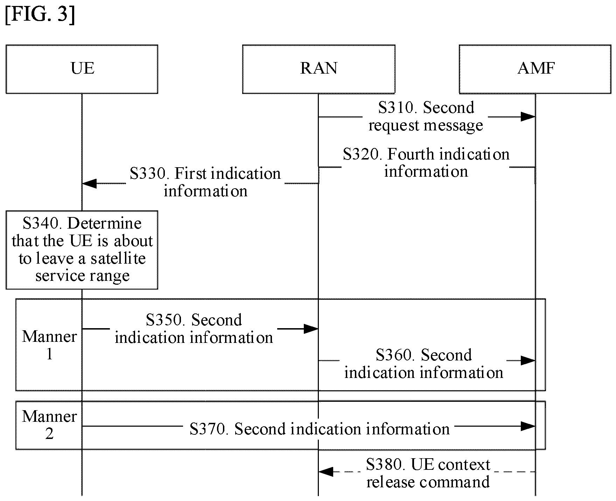

The method procedure shown in FIG. 2 indicates that, in the UE registration procedure (or after registration, or in a newly added procedure), the UE may be indicated to report, via the second indication information after entering the idle state or the suspended state and after leaving the satellite service range, a state in which the UE is about to leave the satellite service range. This helps the AMF make a paging decision. This application further provides another communication method. After determining that the UE is inactive, the AMF indicates the UE to report the second indication information. For ease of understanding, the following describes the communication method with reference to FIG. 3.

FIG. 3 is a schematic flowchart of another communication method according to an embodiment of this application. The method includes the following steps:
S310. A RAN sends a second request message to an AMF, in other words, the AMF receives the second request message from the RAN.

The second request message is used to request to release a UE context.

For example, before sending the second request message to the AMF, the RAN may determine that a UE needs to release an AN connection. For a specific determining manner, refer to the descriptions about that the RAN determines that the UE needs to release the AN connection, in step S230 in the method procedure shown in FIG. 2. Details are not described herein again.

In an implementation, the second request message may further include fifth indication information, where the fifth indication information indicates that the UE is in a satellite service range.

In this implementation, the RAN may determine, based on location information of the UE, ephemeris information, and the like that are obtained last time, that the UE is in the satellite service range.

For example, the RAN determines, based on the location information of the UE and the ephemeris information, that a distance between the UE and an edge of the satellite service range is greater than a threshold (for example, greater than 1 km); and/or
the RAN determines that signal strength of the UE is greater than a threshold.

It should be understood that the threshold in this embodiment of this application may be predefined in a protocol, or may be negotiated between devices, or may be configured by a management device.

In another implementation, the second request message may further include latest location information of the UE, and the AMF determines, based on the location information or the ephemeris information, that the UE is in the satellite service range. The ephemeris information may also be included in the second request message.

In still another implementation, the second request message may further include service range assistance information and/or service range determining periodicity information. The service range assistance information and/or the service range determining periodicity information are/is information used by the AMF to determine whether the UE is within the satellite service range. For specific descriptions of the service range assistance information and/or the service range determining periodicity information, refer to the descriptions of the service range assistance information and/or the service range determining periodicity information in the embodiment shown in FIG. 2. Details are not described herein again.

S320. The AMF sends fourth indication information to the RAN, in other words, the RAN receives the fourth indication information from the AMF. The fourth indication information indicates the RAN to request the UE to notify a network when the UE enters an idle state or a suspended state and is about to leave a satellite service range.

Optionally, the fourth indication information and the first indication information may be the same or different information.

For example, the fourth indication information is included in a second response message, where the second response message indicates the RAN to release the UE context.

For example, after determining that the UE is in the satellite service range and is inactive, the AMF sends the second response message to the RAN.

Further, after receiving the second response message, the RAN sends the first indication information to the UE. A method procedure shown in FIG. 3 further includes the following step:
S330. The RAN sends the first indication information to the UE, in other words, the UE receives the first indication information from the RAN.

For functional descriptions of the first indication information, refer to the descriptions of the first indication information in step S210 in FIG. 2. Details are not described herein again.

For example, the RAN sends an RRC release message to the UE, where the RRC release message includes the first indication information.

Optionally, the RRC release message may include a suspend indication, and the suspension indication information indicates the UE to enter the suspended state.

Specifically, the UE receives the first indication information. Further, after entering the idle state and when determining that the UE is about to leave the satellite service range, the UE reports, via the second indication information, that the UE is about to leave the satellite service range or requests to use a power saving mode.

Alternatively, when the RRC release message includes the suspend indication, after receiving the RRC release message, the UE enters the suspended state, and in the suspended state, determines that the UE is about to leave the satellite service range or requests to use the power saving mode.

The method procedure shown in FIG. 3 further includes the following step:
S340. The UE determines that the UE is about to leave the satellite service range.

Similar to the procedure shown in FIG. 2, after determining that the UE is about to leave the satellite service range, the UE may perform reporting via the second indication information in the following two manners.

Manner 1: The UE notifies the RAN via the second indication information. In Manner 1, the method procedure shown in FIG. 3 further includes the following steps:
S350. The UE sends the second indication information to the RAN, in other words, the RAN receives the second indication information from the UE.

S360. The RAN sends third indication information to the AMF, in other words, the AMF receives the third indication information from the RAN.

Manner 2: The UE notifies the AMF via the second indication information. In Manner 2, the method procedure shown in FIG. 3 further includes the following step:
S370. The UE sends the second indication information to the AMF, in other words, the AMF receives the second indication information from the UE.

Further, after receiving the second indication information and/or the third indication information, the AMF may perform a subsequent procedure of releasing the UE context, or the AMF may indicate the RAN to release the UE context. The method procedure shown in FIG. 3 may further include the following step:

S380. The AMF sends a UE context release command to the RAN, in other words, the RAN receives the UE context release command from the AMF.

For descriptions of steps S340 to S380, refer to the descriptions of steps S240 to S280. Details are not described herein again.

Subsequently, if the UE enters a satellite coverage area again, the UE may send a registration request message or a service request message to the AMF.

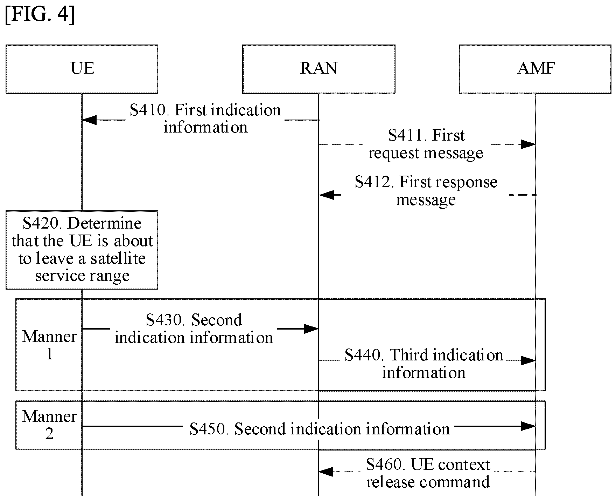

In the method procedure shown in FIG. 3, the AMF determines to send the first indication information. This application further provides still another communication method, where the RAN determines and delivers the first indication information. For ease of understanding, the following describes the communication method with reference to FIG. 4.

FIG. 4 is a schematic flowchart of another communication method according to an embodiment of this application. The method includes the following step:
S410. A RAN sends first indication information to a UE, in other words, the UE receives the first indication information from the RAN.

For functional descriptions of the first indication information, refer to the descriptions of the first indication information in step S210 in FIG. 2. Details are not described herein again.

For example, before sending the first indication information to the UE, the RAN may determine that the UE needs to release an AN connection. For a specific determining manner, refer to the descriptions about that the RAN determines that the UE needs to release the AN connection, in step S230 in the method procedure shown in FIG. 2. Details are not described herein again.

For example, the RAN sends an RRC release message to the UE, where the RRC release message includes the first indication information.

In a possible implementation, the RRC release message further includes service range assistance information. The service range assistance information is used to assist the UE in determining whether to leave a satellite service range. For descriptions of the service range assistance information, refer to the descriptions of the service range assistance information in the embodiment shown in FIG. 2. Details are not described herein again.

In another possible implementation, the RRC release message further includes service range determining periodicity information, where the service range determining periodicity information indicates a periodicity in which the UE determines whether the UE is about to leave the satellite service range. For descriptions of the service range determining periodicity information, refer to the descriptions of the service range determining periodicity information in the embodiment shown in FIG. 2. Details are not described herein again.

In still another possible implementation, to facilitate the UE to restore to a connected state and report the second indication information, the RRC release message may further include suspension indication information, where the suspension indication information indicates the UE to enter a suspended state.

In this implementation, when the UE accesses the network through the NB-IoT, the suspension indication information indicates the UE to enter an idle with suspend state. Specifically, the RAN sends a UE context suspend request to the AMF, to request to suspend a UE context. After receiving the UE context suspend request, the AMF sends a UE context suspend response to the RAN, to determine to suspend the UE context. In this implementation, a method procedure shown in FIG. 4 further includes the following steps:
S411. The RAN sends a first request message to the AMF, in other words, the AMF receives the first request message from the RAN.

The first request message is used to request to suspend the UE context.

S412. The AMF sends a first response message to the RAN, in other words, the RAN receives the first response message from the AMF.

The first response message indicates the RAN to suspend the UE context.

S420. The UE determines that the UE is about to leave the satellite service range.

In this embodiment, after receiving the RRC release message, the UE enters the idle state, and in the idle state, determines when to leave the satellite service range.

Alternatively, when the RRC release message includes the suspension indication information, the UE enters the suspended state. In the suspended state, the UE determines that the UE is about to leave the satellite service range.

In a possible implementation, the UE determines, based on location information of the UE and ephemeris information, when to leave the satellite service range.

It should be understood that, in this embodiment of this application, by default, the UE is capable of determining whether the UE is to leave the satellite service range.

In another possible implementation, when the RRC release message further includes the service range assistance information and/or the service range determining periodicity information, the UE may consider the service range assistance information and/or the service range determining periodicity information when determining whether to leave the satellite service range.

For example, that the UE determines, after entering the idle state, when to leave the satellite service range includes: The UE determines that the UE is about to leave the satellite service range at a first moment, where the first moment may be any moment after entering the idle state by the UE.

Similar to the procedure shown in FIG. 2, after determining that the UE is about to leave the satellite service range, the UE may perform reporting via the second indication information in the following two manners.

Manner 1: The UE notifies the RAN via the second indication information. In Manner 1, the method procedure shown in FIG. 4 further includes the following steps:
S430. The UE sends the second indication information to the RAN, in other words, the RAN receives the second indication information from the UE.

S440. The RAN sends third indication information to the AMF, in other words, the AMF receives the third indication information from the RAN.

Manner 2: The UE notifies the AMF via the second indication information. In Manner 2, the method procedure shown in FIG. 3 further includes the following step:
S450. The UE sends the second indication information to the AMF, in other words, the AMF receives the second indication information from the UE.

Further, after receiving the second indication information and/or the third indication information, the AMF may perform a subsequent procedure of releasing the UE context, or the AMF may indicate the RAN to release the UE context. The method procedure shown in FIG. 3 may further include the following step:
S460. The AMF sends a UE context release command to the RAN, in other words, the RAN receives the UE context release command from the AMF.

For descriptions of steps S430 to S460, refer to the descriptions of steps S240 to S280. Details are not described herein again.

Subsequently, if the UE enters a satellite coverage area again, the UE may send a registration request message or a service request message to the AMF.

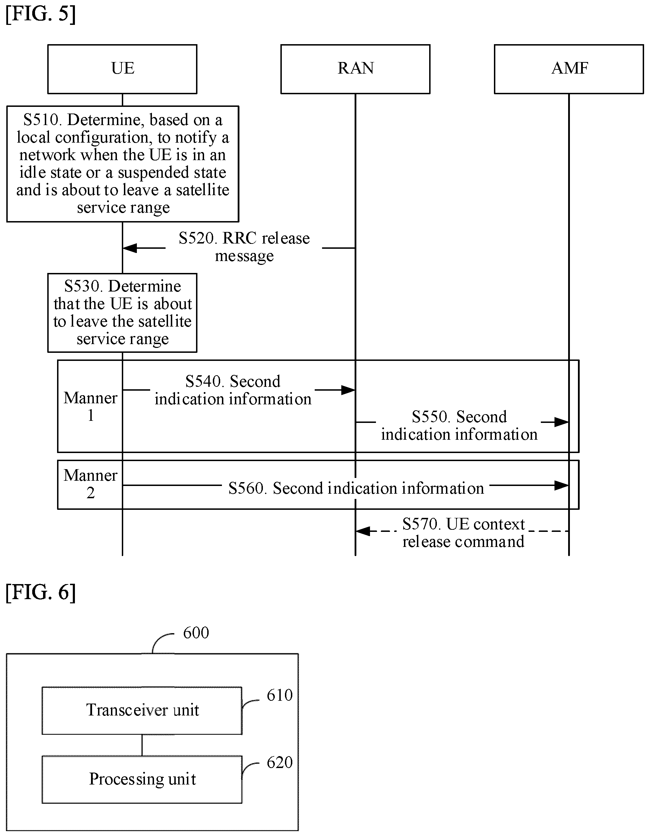

In embodiments shown in FIG. 2 to FIG. 4, the UE provides feedback on the first indication information delivered by the RAN or the AMF, and reports the second indication information. This application further provides another communication method. The UE may determine, based on a local configuration, whether to report the second indication information. The following describes the communication method in detail with reference to FIG. 5.

FIG. 5 is a schematic flowchart of still another communication method according to an embodiment of this application. The method includes the following step:
S510. A UE determines, based on a local configuration, to notify a network when the UE is in an idle state or a suspended state and is about to leave a satellite service range.

In this embodiment, how the UE obtains the local configuration is not limited, and may be predefined by a protocol, or may be configured by a management device.

In an implementation, the local configuration may be a software and/or hardware configuration in the UE.

Specifically, in this embodiment, the local configuration of the UE includes configuration information. The configuration information indicates the UE to notify the network when the UE is in the idle state or the suspended state and is about to leave the satellite service range. In other words, the configuration information indicates the UE in the idle state or the suspended state to notify the network when the UE is about to leave the satellite service range. In other words, the configuration information indicates the UE to notify the network when the UE is about to leave the satellite service range.

Similar to the methods shown in FIG. 2 to FIG. 4, a difference lies in that in the methods shown in FIG. 2 to FIG. 4, the UE determines, based on an indication (for example, a first indication) of a network side (for example, a RAN or an AMF), to notify the network when the UE is in the idle state or the suspended state and is about to leave the satellite service range, while in the embodiment shown in FIG. 5, the UE determines, based on the local configuration, to notify the network when the UE is in the idle state or the suspended state and is about to leave the satellite service range.

Further, as can be learned from step S510, the UE learns of the local configuration, so that the UE may report second indication information after entering the idle state or the suspended state and when the UE is about to leave the satellite service range. For ease of understanding, how the UE reports the second indication information is described below with reference to subsequent steps in FIG. 5. A method procedure shown in FIG. 5 further includes the following steps:
S520. The RAN sends an RRC release message to the UE, in other words, the UE receives the RRC release message from the RAN.

S530. The UE determines that the UE is about to leave the satellite service range.

Further, when the UE determines that the UE is about to leave the satellite service range (for example, at a future moment), the UE may notify a network device side via the second indication information. The UE may perform notification in the following two manners.

Manner 1: The UE notifies the RAN via the second indication information. In Manner 1, the method procedure shown in FIG. 5 further includes the following steps:
S540. The UE sends the second indication information to the RAN, in other words, the RAN receives the second indication information from the UE.

S550. The RAN sends third indication information to the AMF, in other words, the AMF receives the third indication information from the RAN.

Manner 2: The UE notifies the AMF via the second indication information. In Manner 2, the method procedure shown in FIG. 5 further includes the following step:
S560. The UE sends the second indication information to the AMF, in other words, the AMF receives the second indication information from the UE.

For example, the second indication information is carried in a NAS message.

Further, after receiving the second indication information and/or the third indication information, the AMF may perform a subsequent procedure of releasing a UE context, or the AMF may indicate the RAN to release a UE context. The method procedure shown in FIG. 5 may further include the following steps:
S570. The AMF sends a UE context release command to the RAN, in other words, the RAN receives the UE context release command from the AMF.

For descriptions of steps S520 to S570, refer to the descriptions of steps S230 to S280. Details are not described herein again.

Subsequently, if the UE enters a satellite coverage area again, the UE may send a registration request message or a service request message to the AMF.

It should be understood that sequence numbers of the foregoing processes do not mean execution sequences. The execution sequences of the processes should be determined based on functions and internal logic of the processes, and should not be construed as any limitation on the implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

For example, the embodiment shown in FIG. 2 may be combined with the embodiment shown in FIG. 4 (or FIG. 3). The first indication information may be delivered in the registration procedure, or the first indication information may be delivered when the connected state is transited to the idle state after the registration.

It should be further understood that, in some of the foregoing embodiments, a device (for example, a UE, a RAN, or an AMF) in an existing network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, the method and the operation implemented by the device (such as the UE, the RAN, or the AMF) may alternatively be implemented by a component (for example, a chip or a circuit) of the device.

The communication methods provided in embodiments of this application are described above in detail with reference to FIG. 2 to FIG. 5. The foregoing communication methods are mainly described from a perspective of interaction between network elements. It may be understood that, to implement the foregoing functions, each network element includes a corresponding hardware structure and/or software module for performing each function.

A person skilled in the art should be able to be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

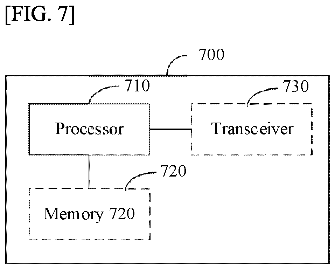

Communication apparatuses provided in embodiments of this application are described below in detail with reference to FIG. 6 and FIG. 7. It should be understood that descriptions of apparatus embodiments correspond to the descriptions of the method embodiments. Therefore, for content that is not described in detail, refer to the foregoing method embodiments. For brevity, some content is not described again.

In embodiments of this application, division into functional modules of a transmitter device or a receiver device may be performed based on the foregoing method examples. For example, functional modules may be obtained through division based on functions, or two or more functions may be integrated into one processing module. The integrated module may be implemented in a form of hardware, or may be implemented in a form of a software functional module. It should be noted that, in embodiments of this application, module division is an example, which is merely logical function division. In actual implementation, another division manner may be used. An example in which division into functional modules is performed based on corresponding functions is used below for description.

FIG. 6 is a block diagram of an apparatus 600 according to an embodiment of this application. The apparatus 600 includes a transceiver unit 610 and a processing unit 620. The transceiver unit 610 may implement a corresponding communication function, and the processing unit 620 is configured to perform data processing. The transceiver unit 610 may also be referred to as a communication interface or a communication unit. When implementing a function of obtaining information, the transceiver unit 610 may also be referred to as an obtaining unit.

Optionally, the apparatus 600 may further include a storage unit. The storage unit may be configured to store instructions and/or data. The processing unit 620 may read the instructions and/or the data in the storage unit, to enable the apparatus to implement the foregoing method embodiments.

The apparatus 600 may be configured to perform an action performed by the device (for example, the UE, the RAN, or the AMF) in the foregoing method embodiments. In this case, the apparatus 600 may be a device or a component that may be disposed in the device. The transceiver unit 610 is configured to perform receiving and sending related operations of the device in the foregoing method embodiments. The processing unit 620 is configured to perform a processing related operation of the device in the foregoing method embodiments.

In a design, the apparatus 600 is configured to perform an action performed by the UE in the method embodiments.

The transceiver unit 610 is configured to receive first indication information, where the first indication information indicates the terminal device to notify a network when the terminal device is in an idle state or a suspended state and is about to leave a satellite service range.

The processing unit 620 is configured to determine that the terminal device in the idle state or the suspended state is about to leave the satellite service range.

The transceiver unit 610 is configured to send second indication information, where the second indication information indicates that the terminal device is about to leave the satellite service range or is used to request to use a power saving mode, where

the terminal device accesses the network through a satellite, and cannot access the network through the satellite within first duration after the terminal device leaves the satellite service range.

The apparatus 600 may implement the steps or procedures performed by the UE in the method embodiments according to embodiments of this application. The apparatus 600 may include units configured to perform the methods performed by the UE in the method embodiments. In addition, the units in the apparatus 600 and the foregoing other operations and/or functions are respectively used to implement corresponding procedures in the method embodiments of the UE in the method embodiments.

When the apparatus 600 is configured to perform the method in FIG. 2, the transceiver unit 610 may be configured to perform receiving and sending steps in the method, for example, steps S210, S220, S230, S250, and S270; and the processing unit 620 may be configured to perform a processing step in the method, for example, step S240.

When the apparatus 600 is configured to perform the method in FIG. 3, the transceiver unit 610 may be configured to perform receiving and sending steps in the method, for example, steps S330, S350, and S370; and the processing unit 620 may be configured to perform a processing step in the method, for example, step S340.

When the apparatus 600 is configured to perform the method in FIG. 4, the transceiver unit 610 may be configured to perform receiving and sending steps in the method, for example, steps S410, S430, and S450; and the processing unit 620 may be configured to perform a processing step in the method, for example, step S420.

When the apparatus 600 is configured to perform the method in FIG. 5, the transceiver unit 610 may be configured to perform receiving and sending steps in the method, for example, steps S520, S540, and S560; and the processing unit 620 may be configured to perform processing steps in the method, for example, steps S510 and S530.

It should be understood that a specific process in which the units perform the foregoing corresponding steps is described in detail in the foregoing method embodiments. For brevity, details are not described herein again.

In another design, the apparatus 600 is configured to perform an action performed by the RAN in the method embodiments.

The transceiver unit 610 is configured to send first indication information to a terminal device, where the first indication information indicates the terminal device to notify a network when the terminal device is in an idle state or a suspended state and is about to leave a satellite service range.

The transceiver unit 610 is configured to receive second indication information from the terminal device, where the second indication information indicates that the terminal device is about to leave the satellite service range or is used to request to use a power saving mode, where

the terminal device accesses the network through a satellite, and cannot access the network through the satellite within first duration after the terminal device leaves the satellite service range.

The apparatus 600 may implement the steps or procedures performed by the RAN in the method embodiments according to embodiments of this application. The apparatus 600 may include units configured to perform the methods performed by the RAN in the method embodiments. In addition, the units in the apparatus 600 and the foregoing other operations and/or functions are respectively used to implement corresponding procedures in the method embodiments of the RAN in the method embodiments.

When the apparatus 600 is configured to perform the method in FIG. 2, the transceiver unit 610 may be configured to perform receiving and sending steps in the method, for example, steps S230, S250, and S260; and the processing unit 620 may be configured to perform a processing step in the method.

When the apparatus 600 is configured to perform the method in FIG. 3, the transceiver unit 610 may be configured to perform receiving and sending steps in the method, for example, steps S310, S320, S330, S350, and S360; and the processing unit 620 may be configured to perform a processing step in the method.

When the apparatus 600 is configured to perform the method in FIG. 4, the transceiver unit 610 may be configured to perform receiving and sending steps in the method, for example, steps S410, S411, S412, S430, and S440; and the processing unit 620 may be configured to perform a processing step in the method.

When the apparatus 600 is configured to perform the method in FIG. 5, the transceiver unit 610 may be configured to perform receiving and sending steps in the method, for example, steps S520, S540, and S550; and the processing unit 620 may be configured to perform a processing step in the method.

It should be understood that a specific process in which the units perform the foregoing corresponding steps is described in detail in the foregoing method embodiments. For brevity, details are not described herein again.

In still another design, the apparatus 600 is configured to perform an action performed by the AMF in the method embodiments.

The transceiver unit 610 is configured to send first indication information to a terminal device, where the first indication information indicates the terminal device to notify a network when the terminal device is in an idle state or a suspended state and is about to leave a satellite service range.

The transceiver unit 610 is configured to receive second indication information from the terminal device, where the second indication information indicates that the terminal device is about to leave the satellite service range or is used to request to use a power saving mode, where
the terminal device accesses the network through a satellite, and cannot access the network through the satellite within first duration after the terminal device leaves the satellite service range.

The apparatus 600 may implement the steps or procedures performed by the AMF in the method embodiments according to embodiments of this application. The apparatus 600 may include units configured to perform the methods performed by the AMF in the method embodiments. In addition, the units in the apparatus 600 and the foregoing other operations and/or functions are respectively used to implement corresponding procedures in the method embodiments of the AMF in the method embodiments.

When the apparatus 600 is configured to perform the method in FIG. 2, the transceiver unit 610 may be configured to perform receiving and sending steps in the method, for example, steps S210, S220, S260, and S270; and the processing unit 620 may be configured to perform a processing step in the method.

When the apparatus 600 is configured to perform the method in FIG. 3, the transceiver unit 610 may be configured to perform receiving and sending steps in the method, for example, steps S310, S320, S330, S360, and S370; and the processing unit 620 may be configured to perform a processing step in the method.

When the apparatus 600 is configured to perform the method in FIG. 4, the transceiver unit 610 may be configured to perform receiving and sending steps in the method, for example, steps S411, S412, S450, and S440; and the processing unit 620 may be configured to perform a processing step in the method.

When the apparatus 600 is configured to perform the method in FIG. 5, the transceiver unit 610 may be configured to perform receiving and sending steps in the method, for example, steps S550 and S560; and the processing unit 620 may be configured to perform a processing step in the method.

It should be understood that a specific process in which the units perform the foregoing corresponding steps is described in detail in the foregoing method embodiments. For brevity, details are not described herein again.

The processing unit 620 in the foregoing embodiment may be implemented by at least one processor or a processor-related circuit. The transceiver unit 610 may be implemented by a transceiver or a transceiver-related circuit. The storage unit may be implemented by at least one memory.

As shown in FIG. 7, an embodiment of this application further provides an apparatus 700. The apparatus 700 includes a processor 710, and may further include one or more memories 720. The processor 710 is coupled to the memory 720. The memory 720 is configured to store a computer program or instructions and/or data. The processor 710 is configured to execute the computer program or the instructions and/or the data stored in the memory 720, so that the methods in the foregoing method embodiments are performed. Optionally, the apparatus 700 includes one or more processors 710.

Optionally, the memory 720 and the processor 710 may be integrated, or separately disposed.

Optionally, as shown in FIG. 7, the apparatus 700 may further include a transceiver 730, where the transceiver 730 is configured to receive and/or send a signal. For example, the processor 710 is configured to control the transceiver 730 to receive and/or send a signal.

In a solution, the apparatus 700 is configured to implement operations executed by the device (like the UE, the RAN, or the AMF) in the foregoing method embodiments.

An embodiment of this application further provides a computer-readable storage medium. The computer-readable storage medium stores computer instructions used to implement the method performed by the device (like the UE, the RAN, or the AMF) in the foregoing method embodiments.

For example, when the computer program is executed by a computer, the computer is enabled to implement the method performed by the network device in the foregoing method embodiments.

An embodiment of this application further provides a computer program product including instructions. When the instructions are executed by a computer, the computer is enabled to implement the method performed by the device (like the UE, the RAN, or the AMF) in the foregoing method embodiments.

An embodiment of this application further provides a communication system. The communication system includes the device (like the UE, the RAN, or the AMF) in the foregoing embodiments.

For explanations and beneficial effects of related content of any one of the apparatuses provided above, refer to the corresponding method embodiments provided above. Details are not described herein again.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM can be used as an external cache. By way of example rather than limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other suitable type of memory.

A person of ordinary skill in the art may be aware that, in combination with the examples described in embodiments disclosed in this specification, units and methods may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the protection scope of this application.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located at one position, or may be distributed on a plurality of network units. A part or all of the units may be selected based on actual requirements to implement the solutions provided in this application.

In addition, functional units in embodiments of this application may be integrated into one unit, each of the units may exist alone physically, or two or more units may be integrated into one unit.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a terminal device, first indication information, wherein the first indication information indicates the terminal device to notify a network when the terminal device is in an idle state or a suspended state and is about to leave a satellite service range;
determining, by the terminal device in the idle state or the suspended state, that the terminal device is about to leave the satellite service range; and
sending, by the terminal device, second indication information, wherein the second indication information indicates that the terminal device is about to leave the satellite service range or is used to request to use a power saving mode, wherein
the terminal device accesses the network through a satellite, and cannot access the network through the satellite within first duration after the terminal device leaves the satellite service range.

2. The method according to claim 1, wherein the determining, by the terminal device in the idle state or the suspended state, that the terminal device is about to leave the satellite service range comprises:
determining, by the terminal device in the idle state or the suspended state based on location information of the terminal device and ephemeris information, that the terminal device is about to leave the satellite service range.

3. The method according to claim 1 or 2, wherein the receiving, by a terminal device, first indication information comprises:
receiving, by the terminal device, the first indication information from an access network device.

4. The method according to claim 3, wherein the first indication information is carried in a first message, and the first message further comprises at least one of the following information:
service range assistance information, service range determining periodicity information, or suspension indication information, wherein
the first message indicates the terminal device to release an access network AN connection, the service range assistance information is used to assist the terminal device in determining whether the terminal device is about to leave the satellite service range, the service range determining periodicity information indicates a periodicity in which the terminal device determines whether the terminal device is about to leave the satellite service range, and the suspension indication information indicates the terminal device to enter the suspended state.

5. The method according to claim 1 or 2, wherein the receiving, by a terminal device, first indication information comprises:
receiving, by the terminal device, the first indication information from a mobility management function network element.

6. The method according to claim 5, wherein the first indication information is carried in a second message, and the second message further comprises service range assistance information and/or service range determining periodicity information, wherein
the service range assistance information is used to assist the terminal device in determining whether the terminal device is about to leave the satellite service range, and the service range determining periodicity information indicates a periodicity in which the terminal device determines whether the terminal device is about to leave the satellite service range.

7. The method according to any one of claims 1 to 6, wherein the sending, by the terminal device, second indication information comprises:
sending, by the terminal device, the second indication information to the access network device and/or the mobility management function network element.

8. A communication method, comprising:
sending, by an access network device, first indication information to a terminal device, wherein the first indication information indicates the terminal device to notify a network when the terminal device is in an idle state or a suspended state and is about to leave a satellite service range; and
receiving, by the access network device, second indication information from the terminal device, wherein the second indication information indicates that the terminal device is about to leave the satellite service range or is used to request to use a power saving mode, wherein
the terminal device accesses the network through a satellite, and cannot access the network through the satellite within first duration after the terminal device leaves the satellite service range.

9. The method according to claim 8, wherein the method further comprises:
sending, by the access network device, the second indication information to a mobility management function network element, wherein the second indication information indicates that the terminal device is about to leave the satellite service range or indicates the terminal device to request to use the power saving mode.

10. The method according to claim 8 or 9, wherein the first indication information is carried in a first message, and the first message further comprises at least one of the following information:
service range assistance information, service range determining periodicity information, or suspension indication information, wherein
the first message indicates the terminal device to release an access network AN connection, the service range assistance information is used to assist the terminal device in determining whether the terminal device is about to leave the satellite service range, the service range determining periodicity information indicates a periodicity in which the terminal device determines whether the terminal device is about to leave the satellite service range, and the suspension indication information indicates the terminal device to enter the suspended state.

11. The method according to any one of claims 8 to 10, wherein before the sending, by an access network device, first indication information to a terminal device, the method further comprises:
determining, by the access network device, that the terminal device is in the satellite service range and the terminal device is inactive; or
determining, by the access network device, that the terminal device is in the satellite service range, and receiving information indicating that the terminal device needs to release the AN connection.

12. The method according to any one of claims 8 to 11, wherein before the sending, by an access network device, first indication information to a terminal device, the method further comprises:
receiving, by the access network device, fourth indication information from the mobility management function network element, wherein the fourth indication information indicates the access network device to request the terminal device to notify the network when the terminal device is about to leave the satellite service range.

13. A communication method, comprising:
sending, by a mobility management function network element, first indication information to a terminal device, wherein the first indication information indicates the terminal device to notify a network when the terminal device is in an idle state or a suspended state and is about to leave a satellite service range; and
receiving, by the mobility management function network element, second indication information from the terminal device, wherein the second indication information indicates that the terminal device is about to leave the satellite service range or indicates the terminal device to request to use a power saving mode, wherein
the terminal device accesses the network through a satellite, and cannot access the network through the satellite within first duration after the terminal device leaves the satellite service range.

14. The method according to claim 13, wherein the first indication information is carried in a second message, and the second message further comprises service range assistance information and/or service range determining periodicity information, wherein
the service range assistance information is used to assist the terminal device in determining whether the terminal device is about to leave the satellite service range, and the service range determining periodicity information indicates a periodicity in which the terminal device determines whether the terminal device is about to leave the satellite service range.

15. The method according to claim 13 or 14, wherein the method further comprises: sending, by the mobility management function network element, fourth indication information to an access network device, wherein the fourth indication information indicates the access network device to request the terminal device to notify the network when the terminal device is about to leave the satellite service range.

16. The method according to claim 15, wherein before the sending, by the mobility management function network element, fourth indication information to an access network device, the method further comprises:
determining, by the mobility management function network element, that the terminal device is in the satellite service range.

17. A communication method, comprising:
sending, by a mobility management function network element, first indication information to an access network device, wherein the first indication information indicates the terminal device to notify a network when the terminal device is in an idle state or a suspended state and is about to leave a satellite service range;
receiving, by the access network device, the first indication information, and sending second indication information to the mobility management function network element, wherein the second indication information indicates that the terminal device is about to leave the satellite service range or indicates the terminal device to request to use a power saving mode; and
receiving, by the mobility management function network element, the second indication information from the access network device.

18. A communication apparatus, comprising:
a receiving unit, configured to receive first indication information, wherein the first indication information indicates the terminal device to notify a network when the terminal device is in an idle state or a suspended state and is about to leave a satellite service range;
a processing unit, configured to determine that the terminal device in the idle state or the suspended state is about to leave the satellite service range; and
a sending unit, configured to send second indication information, wherein the second indication information indicates that the terminal device is about to leave the satellite service range or is used to request to use a power saving mode, wherein the terminal device accesses the network through a satellite, and cannot access the network through the satellite within first duration after the terminal device leaves the satellite service range.

19. The apparatus according to claim 18, wherein that the processing unit determines that the terminal device in the idle state or the suspended state is about to leave the satellite service range comprises:
the processing unit determines, based on location information of the terminal device and ephemeris information, that the terminal device in the idle state or the suspended state is about to leave the satellite service range.

20. The apparatus according to claim 18 or 19, wherein that the receiving unit receives the first indication information comprises:
the receiving unit receives the first indication information from an access network device.

21. The apparatus according to claim 20, wherein the first indication information is carried in a first message, and the first message further comprises at least one of the following information:
service range assistance information, service range determining periodicity information, or suspension indication information, wherein
the first message indicates the terminal device to release an access network AN connection, the service range assistance information is used to assist the terminal device in determining whether the terminal device is about to leave the satellite service range, the service range determining periodicity information indicates a periodicity in which the terminal device determines whether the terminal device is about to leave the satellite service range, and the suspension indication information indicates the terminal device to enter the suspended state.

22. The apparatus according to claim 18 or 19, wherein that the receiving unit receives the first indication information comprises:
the receiving unit receives the first indication information from a mobility management function network element.

23. The apparatus according to claim 22, wherein the first indication information is carried in a second message, and the second message further comprises service range assistance information and/or service range determining periodicity information, wherein
the service range assistance information is used to assist the terminal device in determining whether the terminal device is about to leave the satellite service range, and the service range determining periodicity information indicates a periodicity in which the terminal device determines whether the terminal device is about to leave the satellite service range.

24. The apparatus according to any one of claims 18 to 23, wherein that the sending unit sends the second indication information comprises:
the sending unit sends the second indication information to the access network device and/or the mobility management function network element.

25. A communication apparatus, comprising:
a sending unit, configured to send first indication information to a terminal device, wherein the first indication information indicates the terminal device to notify a network when the terminal device is in an idle state or a suspended state and is about to leave a satellite service range; and
a receiving unit, configured to receive second indication information from the terminal device, wherein the second indication information indicates that the terminal device is about to leave the satellite service range or is used to request to use a power saving mode, wherein
the terminal device accesses the network through a satellite, and cannot access the network through the satellite within first duration after the terminal device leaves the satellite service range.

26. The apparatus according to claim 25, wherein the sending unit is further configured to send the second indication information to a mobility management function network element, wherein the second indication information indicates that the terminal device is about to leave the satellite service range or indicates the terminal device to request to use the power saving mode.

27. The apparatus according to claim 25 or 26, wherein the first indication information is carried in a first message, and the first message further comprises at least one of the following information:
service range assistance information, service range determining periodicity information, or suspension indication information, wherein
the first message indicates the terminal device to release an access network AN connection, the service range assistance information is used to assist the terminal device in determining whether the terminal device is about to leave the satellite service range, the service range determining periodicity information indicates a periodicity in which the terminal device determines whether the terminal device is about to leave the satellite service range, and the suspension indication information indicates the terminal device to enter the suspended state.

28. The apparatus according to any one of claims 25 to 27, wherein the apparatus further comprises:
a processing unit, configured to determine that the terminal device is in the satellite service range and the terminal device is inactive, wherein
the processing unit is alternatively configured to determine that the terminal device is in the satellite service range, and the receiving unit is configured to receive information indicating that the terminal device needs to release the AN connection.

29. The apparatus according to any one of claims 25 to 28, wherein before the sending unit sends the first indication information to the terminal device, the receiving unit is further configured to receive fourth indication information from the mobility management function network element, wherein the fourth indication information indicates the access network device to request the terminal device to notify the network when the terminal device is about to leave the satellite service range.

30. A communication apparatus, comprising:
a sending unit, configured to send first indication information to a terminal device, wherein the first indication information indicates the terminal device to notify a network when the terminal device is in an idle state or a suspended state and is about to leave a satellite service range; and
a receiving unit, configured to receive second indication information from the terminal device, wherein the second indication information indicates that the terminal device is about to leave the satellite service range or indicates the terminal device to request to use a power saving mode, wherein
the terminal device accesses the network through a satellite, and cannot access the network through the satellite within first duration after the terminal device leaves the satellite service range.

31. The apparatus according to claim 30, wherein the first indication information is carried in a second message, and the second message further comprises service range assistance information and/or service range determining periodicity information, wherein
the service range assistance information is used to assist the terminal device in determining whether the terminal device is about to leave the satellite service range, and the service range determining periodicity information indicates a periodicity in which the terminal device determines whether the terminal device is about to leave the satellite service range.

32. The apparatus according to claim 30 or 31, wherein the sending unit is further configured to send fourth indication information to an access network device, wherein the fourth indication information indicates the access network device to request the terminal device to notify the network when the terminal device is about to leave the satellite service range.

33. The apparatus according to claim 32, wherein the apparatus further comprises:
a processing unit, configured to determine that the terminal device is in the satellite service range.

34. A communication apparatus, comprising a processor, wherein the processor is coupled to a memory, the memory is configured to store a computer program or instructions, and the processor is configured to execute the computer program or the instructions in the memory, to enable the apparatus to perform the method according to any one of claims 1 to 16.

35. A computer-readable storage medium, wherein the computer-readable storage medium stores a computer program or instructions, and when the computer program or the instructions are run on a computer, the computer is enabled to perform the method according to any one of claims 1 to 16.

36. A chip system, comprising a processor, configured to invoke a computer program from a memory and run the computer program, to enable a communication device on which the chip system is installed to perform the method according to any one of claims 1 to 16.

37. A computer program product, wherein when the computer program product is run on a computer, the computer is enabled to perform the method according to any one of claims 1 to 16.

38. A communication system, comprising a mobility management function network element and an access network device, wherein
the mobility management function network element is configured to send first indication information to the access network device, wherein the first indication information indicates a terminal device to notify a network when the terminal device is in an idle state or a suspended state and is about to leave a satellite service range;
the access network device is configured to receive the first indication information, and send second indication information to the mobility management function network element, wherein the second indication information indicates that the terminal device is about to leave the satellite service range or indicates the terminal device to request to use a power saving mode; and
the mobility management function network element is configured to receive the second indication information from the access network device.

## Amended claims

### Amended claims under Art. 19.1 PCT

1. [Modified] A communication method, comprising:
receiving, by a terminal device, first indication information, wherein the first indication information indicates the terminal device to notify a network when the terminal device is about to leave a satellite service range;
determining, by the terminal device, that the terminal device is about to leave the satellite service range; and
sending, by the terminal device, second indication information, wherein the second indication information indicates that the terminal device is about to leave the satellite service range or is used to request to use a power saving mode, wherein
the terminal device accesses the network through a satellite, and cannot access the network through the satellite within first duration after the terminal device leaves the satellite service range.

2. [Modified] The method according to claim 1, wherein the determining, by the terminal device, that the terminal device is about to leave the satellite service range comprises: determining, by the terminal device based on location information of the terminal device, that the terminal device is about to leave the satellite service range.

3. The method according to claim 1 or 2, wherein the receiving, by a terminal device, first indication information comprises:
receiving, by the terminal device, the first indication information from an access network device.

4. [Modified]The method according to any one of claims 1 to 3, wherein before the determining, by the terminal device, that the terminal device is about to leave the satellite service range, the method further comprises:
entering, by the terminal device, an idle state or a suspended state.

5. The method according to claim 1 or 2, wherein the receiving, by a terminal device, first indication information comprises:
receiving, by the terminal device, the first indication information from a mobility management function network element.

6. [Modified] The method according to any one of claims 1 to 5, wherein the first indication information is carried in a registration response message.

7. The method according to any one of claims 1 to 6, wherein the sending, by the terminal device, second indication information comprises:
sending, by the terminal device, the second indication information to the access network device and/or the mobility management function network element.

8. [Modified] A communication method, comprising:
sending, by an access network device, first indication information to a terminal device, wherein the first indication information indicates the terminal device to notify a network when the terminal device is about to leave a satellite service range; and
receiving, by the access network device, second indication information from the terminal device, wherein the second indication information indicates that the terminal device is about to leave the satellite service range or is used to request to use a power saving mode, wherein
the terminal device accesses the network through a satellite, and cannot access the network through the satellite within first duration after the terminal device leaves the satellite service range.

9. The method according to claim 8, wherein the method further comprises:
sending, by the access network device, the second indication information to a mobility management function network element, wherein the second indication information indicates that the terminal device is about to leave the satellite service range or indicates the terminal device to request to use the power saving mode.

10. The method according to claim 8 or 9, wherein the first indication information is carried in a first message, and the first message further comprises at least one of the following information:
service range assistance information, service range determining periodicity information, or suspension indication information, wherein
the first message indicates the terminal device to release an access network AN connection, the service range assistance information is used to assist the terminal device in determining whether the terminal device is about to leave the satellite service range, the service range determining periodicity information indicates a periodicity in which the terminal device determines whether the terminal device is about to leave the satellite service range, and the suspension indication information indicates the terminal device to enter the suspended state.

11. The method according to any one of claims 8 to 10, wherein before the sending, by an access network device, first indication information to a terminal device, the method further comprises:
determining, by the access network device, that the terminal device is in the satellite service range and the terminal device is inactive; or
determining, by the access network device, that the terminal device is in the satellite service range, and receiving information indicating that the terminal device needs to release the AN connection.

12. The method according to any one of claims 8 to 11, wherein before the sending, by an access network device, first indication information to a terminal device, the method further comprises:
receiving, by the access network device, fourth indication information from the mobility management function network element, wherein the fourth indication information indicates the access network device to request the terminal device to notify the network when the terminal device is about to leave the satellite service range.

13. [Modified] A communication method, comprising:
sending, by a mobility management function network element, first indication information to a terminal device, wherein the first indication information indicates the terminal device to notify a network when the terminal device is about to leave a satellite service range; and
receiving, by the mobility management function network element, second indication information from the terminal device, wherein the second indication information indicates that the terminal device is about to leave the satellite service range or indicates the terminal device to request to use a power saving mode, wherein
the terminal device accesses the network through a satellite, and cannot access the network through the satellite within first duration after the terminal device leaves the satellite service range.

14. The method according to claim 13, wherein the first indication information is carried in a second message, and the second message further comprises service range assistance information and/or service range determining periodicity information, wherein
the service range assistance information is used to assist the terminal device in determining whether the terminal device is about to leave the satellite service range, and the service range determining periodicity information indicates a periodicity in which the terminal device determines whether the terminal device is about to leave the satellite service range.

15. The method according to claim 13 or 14, wherein the method further comprises: sending, by the mobility management function network element, fourth indication information to an access network device, wherein the fourth indication information indicates the access network device to request the terminal device to notify the network when the terminal device is about to leave the satellite service range.

16. The method according to claim 15, wherein before the sending, by the mobility management function network element, fourth indication information to an access network device, the method further comprises:
determining, by the mobility management function network element, that the terminal device is in the satellite service range.

17. [Modified] A communication method, comprising:
sending, by a mobility management function network element, first indication information to an access network device, wherein the first indication information indicates the terminal device to notify a network when the terminal device is about to leave a satellite service range;
receiving, by the access network device, the first indication information, and sending second indication information to the mobility management function network element, wherein the second indication information indicates that the terminal device is about to leave the satellite service range or indicates the terminal device to request to use a power saving mode; and
receiving, by the mobility management function network element, the second indication information from the access network device.

18. [Modified] A communication apparatus, comprising:
a receiving unit, configured to receive first indication information, wherein the first indication information indicates the terminal device to notify a network when the terminal device is about to leave a satellite service range;
a processing unit, configured to determine that the terminal device is about to leave the satellite service range; and
a sending unit, configured to send second indication information, wherein the second indication information indicates that the terminal device is about to leave the satellite service range or is used to request to use a power saving mode, wherein the terminal device accesses the network through a satellite, and cannot access the network through the satellite within first duration after the terminal device leaves the satellite service range.

19. [Modified] The apparatus according to claim 18, wherein that the processing unit determines that the terminal device is about to leave the satellite service range comprises:
the processing unit determines, based on location information of the terminal device, that the terminal device is about to leave the satellite service range.

20. The apparatus according to claim 18 or 19, wherein that the receiving unit receives the first indication information comprises:
the receiving unit receives the first indication information from an access network device.

21. The apparatus according to claim 20, wherein the first indication information is carried in a first message, and the first message further comprises at least one of the following information:
service range assistance information, service range determining periodicity information, or suspension indication information, wherein
the first message indicates the terminal device to release an access network AN connection, the service range assistance information is used to assist the terminal device in determining whether the terminal device is about to leave the satellite service range, the service range determining periodicity information indicates a periodicity in which the terminal device determines whether the terminal device is about to leave the satellite service range, and the suspension indication information indicates the terminal device to enter the suspended state.

22. The apparatus according to claim 18 or 19, wherein that the receiving unit receives the first indication information comprises:
the receiving unit receives the first indication information from a mobility management function network element.

23. The apparatus according to claim 22, wherein the first indication information is carried in a second message, and the second message further comprises service range assistance information and/or service range determining periodicity information, wherein
the service range assistance information is used to assist the terminal device in determining whether the terminal device is about to leave the satellite service range, and the service range determining periodicity information indicates a periodicity in which the terminal device determines whether the terminal device is about to leave the satellite service range.

24. The apparatus according to any one of claims 18 to 23, wherein that the sending unit sends the second indication information comprises:
the sending unit sends the second indication information to the access network device and/or the mobility management function network element.

25. [Modified] A communication apparatus, comprising:
a sending unit, configured to send first indication information to a terminal device, wherein the first indication information indicates the terminal device to notify a network when the terminal device is about to leave a satellite service range; and
a receiving unit, configured to receive second indication information from the terminal device, wherein the second indication information indicates that the terminal device is about to leave the satellite service range or is used to request to use a power saving mode, wherein
the terminal device accesses the network through a satellite, and cannot access the network through the satellite within first duration after the terminal device leaves the satellite service range.

26. The apparatus according to claim 25, wherein the sending unit is further configured to send the second indication information to a mobility management function network element, wherein the second indication information indicates that the terminal device is about to leave the satellite service range or indicates the terminal device to request to use the power saving mode.

27. The apparatus according to claim 25 or 26, wherein the first indication information is carried in a first message, and the first message further comprises at least one of the following information:
service range assistance information, service range determining periodicity information, or suspension indication information, wherein
the first message indicates the terminal device to release an access network AN connection, the service range assistance information is used to assist the terminal device in determining whether the terminal device is about to leave the satellite service range, the service range determining periodicity information indicates a periodicity in which the terminal device determines whether the terminal device is about to leave the satellite service range, and the suspension indication information indicates the terminal device to enter the suspended state.

28. The apparatus according to any one of claims 25 to 27, wherein the apparatus further comprises:
a processing unit, configured to determine that the terminal device is in the satellite service range and the terminal device is inactive, wherein
the processing unit is alternatively configured to determine that the terminal device is in the satellite service range, and the receiving unit is configured to receive information indicating that the terminal device needs to release the AN connection.

29. The apparatus according to any one of claims 25 to 28, wherein before the sending unit sends the first indication information to the terminal device, the receiving unit is further configured to receive fourth indication information from the mobility management function network element, wherein the fourth indication information indicates the access network device to request the terminal device to notify the network when the terminal device is about to leave the satellite service range.

30. [Modified] The apparatus according to claim 25 or 26, wherein the sending unit is further configured to send fourth indication information to an access network device, wherein the fourth indication information indicates the access network device to request the terminal device to notify the network when the terminal device is about to leave the satellite service range.

31. [Modified] The apparatus according to claim 30, wherein the apparatus further comprises:
a processing unit, configured to determine that the terminal device is in the satellite service range.

32. A communication apparatus, comprising a processor, wherein the processor is coupled to a memory, the memory is configured to store a computer program or instructions, and the processor is configured to execute the computer program or the instructions in the memory, to enable the apparatus to perform the method according to any one of claims 1 to 16.

33. A computer-readable storage medium, wherein the computer-readable storage medium stores a computer program or instructions, and when the computer program or the instructions are run on a computer, the computer is enabled to perform the method according to any one of claims 1 to 16.

34. A chip system, comprising a processor, configured to invoke a computer program from a memory and run the computer program, to enable a communication device on which the chip system is installed to perform the method according to any one of claims 1 to 16.

35. A computer program product, wherein when the computer program product is run on a computer, the computer is enabled to perform the method according to any one of claims 1 to 16.

36. [Modified] A communication system, comprising a mobility management function network element and an access network device, wherein
the mobility management function network element is configured to send first indication information to the access network device, wherein the first indication information indicates a terminal device to notify a network when the terminal device is about to leave a satellite service range;
the access network device is configured to receive the first indication information, and send the first indication information to the terminal device;
the access network device is further configured to receive second indication information from the terminal device, and send the second indication information to the mobility management function network element, wherein the second indication information indicates that the terminal device is about to leave the satellite service range or indicates the terminal device to request to use a power saving mode; and
the mobility management function network element is configured to receive the second indication information from the access network device.
